(19) Europäisches Patentamt
European Patent Office
Office européen des brevets

(11) **EP 2 790 317 B1**

(12) **EUROPEAN PATENT SPECIFICATION**

(45) Date of publication and mention
of the grant of the patent:
**20.06.2018 Bulletin 2018/25**

(51) Int Cl.:
*H02P 27/06* (2006.01)   *H02M 7/48* (2007.01)
*H02P 27/08* (2006.01)   *H02M 7/5387* (2007.01)
*H02M 1/00* (2006.01)

(21) Application number: **11877082.5**

(22) Date of filing: **06.12.2011**

(86) International application number:
**PCT/JP2011/078136**

(87) International publication number:
**WO 2013/084289 (13.06.2013 Gazette 2013/24)**

(54) **POWER CONVERSION DEVICE**

STROMWANDLER

DISPOSITIF DE CONVERSION D'ÉNERGIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.10.2014 Bulletin 2014/42**

(73) Proprietor: **Mitsubishi Electric Corporation
Tokyo 100-8310 (JP)**

(72) Inventors:
• **SAWADA Seiji**
**Tokyo 100-8310 (JP)**
• **KIMPARA Yoshihiko**
**Tokyo 100-8310 (JP)**
• **KIFUKU Takayuki**
**Tokyo 100-8310 (JP)**
• **AOKI Kazuhiro**
**Tokyo 100-8310 (JP)**

(74) Representative: **Hoffmann Eitle
Patent- und Rechtsanwälte PartmbB
Arabellastraße 30
81925 München (DE)**

(56) References cited:
JP-A- 2007 261 343     JP-A- 2011 061 956
US-A1- 2007 165 431    US-A1- 2010 231 154
US-A1- 2011 062 934

**Description**

Technical Field

The present invention relates to a power conversion device that feeds a multiphase AC motor by converting DC power to AC power, and more particularly, to a power conversion device of an inexpensive configuration enabled to accurately detect a current outputted from the power conversion device.

Background Art

A power conversion device converting a DC to an AC can generate a torque in an AC rotating machine by applying an AC voltage to the AC rotating machine . A torque of the AC rotating machine is proportional to a vector product of a rotor flux and an armature current of the AC rotating machine. It is therefore crucial to understand the armature current, that is, to detect a current of the AC rotating machine in controlling the torque of the AC rotating machine.

A current detection method for an AC rotating machine includes a method using an insulating detector employing a hall effect element. The insulating detector, however, is expensive.

A power conversion device in the related art therefore adopts a technique as follows. That is, current detection resistors are connected between switching elements on one side of arms forming a PWM inverter and a DC power supply. A voltage across each current detection resistor is converted from analog to digital form in synchronization with particular timing in a current-passing period of the switching element, so that a phase current of the corresponding phase is detected. The power conversion device in the related art as above uses inexpensive current detection resistors instead of a hall effect element. It is therefore possible to control the AC rotating machine without having to use an expensive insulating detector for a current detection.

It is, however, necessary for this power conversion device in the related art to convert a voltage across the current detection resistor from analog to digital form in synchronization with particular timing in a current-passing period of the switching element. Hence, this power conversion device has a problem that in the case of so-called overmodulation by which a voltage having a large amplitude accompanying saturation is applied to an AC rotating machine, the current-passing period of the switching element becomes too short to obtain current detection accuracy as desired by converting a voltage across the current detection resistor from analog to digital form.

As a method of solving the problem that the current-passing period of the switching element becomes too short to obtain current detection accuracy as desired, there is a power conversion device configured to detect two currents and find another one current by calculation.

For example, the power conversion device in the related art described in PTL 1 is configured to accurately measure a current flowing to one side of an inverter inside a frequency conversion device by detecting at least two out of a total of three partial currents and finding a third partial current at least by calculation on the ground that a sum of phase currents is always zero. It should be noted, however, that it is necessary in PTL 1 to detect two partial currents simultaneously to ensure uniqueness of the measurement. PTL 1 therefore requires at least two conversion means for converting a voltage across the current detection resistor from analog to digital form. Hence, the power conversion device has to include more than one conversion means for converting a voltage from analog to digital form.

In a case where the power conversion device in the related art as above is controlled using a microcomputer, it becomes necessary to employ a microcomputer equipped with more than one conversion means for converting a voltage from analog to digital form. However, there is a problem that a microcomputer equipped with more than one conversion means for performing A/D conversion is expensive in comparison with a microcomputer equipped with one conversion means for performing A/D conversion.

As such a power conversion device using a microcomputer equipped with only one conversion means for performing A/D conversion, there is a power conversion device in the related art described, for example, in PTL 2.

The power conversion device in the related art described in PTL 2 detects one current using one A/D conversion means, and finds one of the undetected two currents by approximate calculation using values stored in the microcomputer while calculating the other on the ground that a sum of currents of three phases is zero. The power conversion device in the related art described in PTL 2 has a problem that control responsiveness deteriorates because three current values are detected over more than one cycle of a carrier wave. Also, there is another problem that control accuracy deteriorates because a current of only one phase is actually detected and currents of the other two phases are found by calculation.

To overcome these problems, a power conversion device in the related art described in PTL 3 includes a control table set according to an electric angle of an output voltage instruction from an inverter, so that two phases with a longer current-passing period are selected in advance from three switching elements. This power conversion device successively detects currents of two phases according to the control table in synchronization with particular timing in the current-passing period of the switching elements and converts the detected currents to two-phase currents, $i\alpha$ and $i\beta$, of orthogonal

stator coordinates. The power conversion device in the related art descried in PTL 3 realizes a detection of two currents using one A/D conversion means.

Also, a power conversion device in the related art described in PTL 4 generates triangular carrier waves having a 120° phase difference for the respective pairs of the switching elements and performs A/D conversion at troughs of the respective carrier waves. This method eliminates the need to detect currents simultaneously and makes it possible to detect three currents.

US 2007/0165431 A1 shows an inverter device including switching devices and diodes connected in parallel with the switching devices and also including resistances.

US 2011/0062934 A1 teaches a circuit board, a method for determining a current space vector, converter, circuit board and series of converters.

US 2010/0231154 A1 describes a motor control device and a motor control system.

Citation List

Patent Literature

PTL 1: JP-A-6-205589

PTL 2: JP-A-10-28382

PTL 3: JP-A-10-54852

PTL 4: JP-A-2005-229760

Disclosure of Invention

Technical Problem

The power conversion device in the related art described in PTL 1 has a drawback that more than one A/D conversion means is required and the cost is consequently increased in comparison with a case where only one A/D conversion means is used.

Also, the power conversion device in the related art described in PTL 2 uses only one A/D conversion means. However, more than one cycle of the carrier wave is necessary to detect three current values and current values of the undetected phases are found by approximate calculation. Hence, deterioration of control accuracy and deterioration of responsiveness are concerned.

The power conversion device in the related art described in PTL 3 always detects only two current values and cannot detect currents of three phases. For example, in the case of a power conversion device controlling a three-phase asynchronous AC rotating machine, it goes without saying that a degree of control accuracy is increased by detecting current values of three phases and performing the control according to the detected three current values. Hence, this power conversion device has a problem in this point.

The power conversion device in the related art described in PTL 4 can detect three current values. However, a triangular carrier wave is necessary for each pair of switching elements. Hence, for example, in a case where the power conversion device uses a microcomputer capable of generating more than one triangular carrier wave, there is a drawback that the cost is increased in comparison with a case where a microcomputer capable of generating only one triangular carrier wave is used.

The invention was devised to solve the problems discussed above and has an object to obtain a power conversion device of an inexpensive configuration and capable of controlling an AC rotating machine with accuracy regardless of the number of A/D conversion means for detecting a voltage across a current detection resistor.

Solution to Problem

A power conversion device of the invention includes all features of independent claim 1. Further preferred embodiments are described in the respective dependent claims.

Advantageous Effects of Invention

According to the power conversion device of the invention, it becomes possible to obtain a power conversion device of an inexpensive configuration and capable of detecting an output current with accuracy regardless of the number of A/D conversion means, and thereby capable of controlling an AC rotating machine with accuracy while achieving good control responsiveness.

The foregoing and other objects, features, aspects, and advantages of the present invention will become more apparent from the following detailed description of the present invention when taken conjunction with the accompanying drawings.

Brief Description of Drawings

[Fig. 1] Fig. 1 is a view showing an overall configuration of a power conversion device according to a first embodiment of the invention.

[Fig. 2] Fig. 2 is a view used to describe operations of PWM drive means, semiconductor switches, and a current detection resistor of Fig. 1.

[Fig. 3] Fig. 3 is a circuit configuration view showing the current detection means according to the first embodiment of the invention.

[Fig. 4] Fig. 4 is a circuit configuration view showing the current detection means according to the first embodiment of the invention.

[Fig. 5] Fig. 5 is a view showing a relation of an operation of the current detection resistor and a processing time when a current detection by the current detection means is performed once.

[Fig. 6] Fig. 6 is a view showing a relation of an operation of the current detection resistor and a processing time when a current detection by the current detection means is performed three times.

[Fig. 7] Fig. 7 is a view showing a relation of an operation of the current detection resistor and a processing time when a current detection by the current detection means is performed twice.

[Fig. 8] Fig. 8 is a flowchart depicting an operation example of current detection phase selection means according to the first embodiment of the invention.

[Fig. 9] Fig. 9 is a view showing a relation of the PWM drive means, the semiconductor switches, current detection resistors, and a processing time of the current detection means according to the first embodiment of the invention.

[Fig. 10] Fig. 10 is a view showing a relation of the PWM drive means, the semiconductor switches, current detection resistors, and a processing time of the current detection means according to the first embodiment of the invention.

[Fig. 11] Fig. 11 is a flowchart depicting an operation example of the current detection phase selection means according to the first embodiment of the invention.

[Fig. 12] Fig. 12 is a view showing a relation of the PWM drive means, the semiconductor switches, current detection resistors, and a processing time of the current detection means according to the first embodiment of the invention.

[Fig. 13] Fig. 13 is a view showing an example of duty outputs by the PWM drive means in the power conversion device of the invention.

[Fig. 14] Fig. 14 is a view showing an example of duty outputs by the PWM drive means in the power conversion device of the invention.

[Fig. 15] Fig. 15 is a view showing an example of duty outputs by the PWM drive means in the power conversion device of the invention.

[Fig. 16] Fig. 16 is a circuit configuration view showing current detection means according to a second embodiment of the invention.

[Fig. 17] Fig. 17 is a flowchart depicting an operation example of current detection phase selection means according to the second embodiment of the invention.

[Fig. 18] Fig. 18 is a circuit configuration view showing current detection means according to a third embodiment of the invention.

[Fig. 19] Fig. 19 is a flowchart depicting an operation example of current detection phase selection means according to the third embodiment of the invention.

[Fig. 20] Fig. 20 is a view showing a relation of PWM drive means, semiconductor switches, current detection resistors, and a processing time of the current detection means according to the third embodiment of the invention.

[Fig. 21] Fig. 21 is a view showing a relation of the PWM drive means, the semiconductor switches, the current detection resistors, and a processing time of the current detection means according to the third embodiment of the invention.

[Fig. 22] Fig. 22 is a circuit configuration view showing the current detection means according to the third embodiment of the invention.

[Fig. 23] Fig. 23 is a circuit configuration view showing current detection means according to a fourth embodiment of the invention.

[Fig. 24] Fig. 24 is a flowchart depicting an operation example of current detection phase selection means according to the fourth embodiment of the invention.

Description of Embodiments

Hereinafter, embodiments of the invention will be described in detail with reference to the drawings. In the respective drawings, same reference numerals denote same or equivalent portions.

First Embodiment

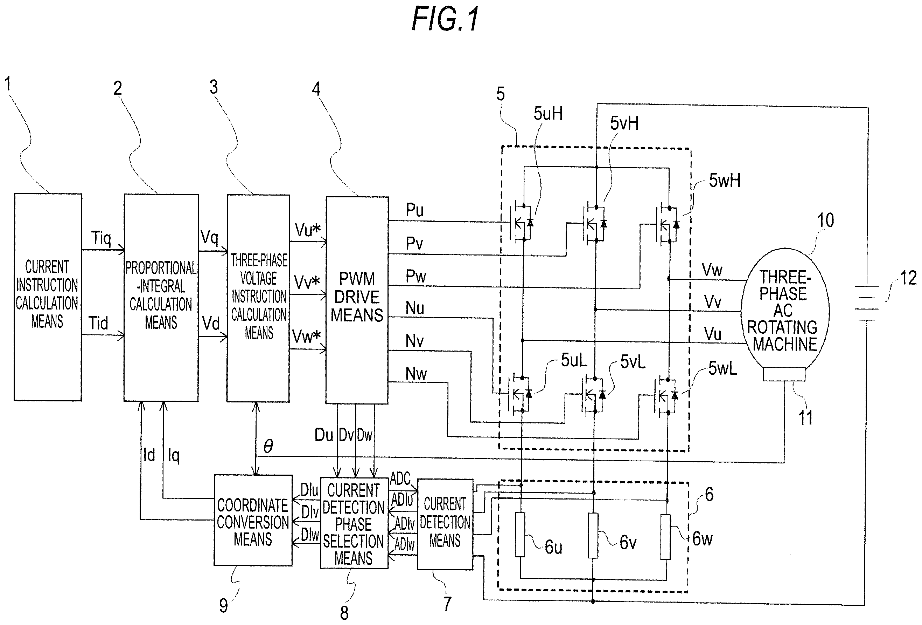

Fig. 1 is a view showing an overall configuration of a power conversion device according to a first embodiment of the invention.

Referring to Fig. 1, a three-phase AC rotating machine 10 includes a position sensor 11 formed, for example, of a resolver detecting a magnetic pole position of a motor, and is configured to output magnetic pole position information of the motor to a control unit (controller) described below by means of the position sensor 11.

Current instruction calculation means 1 as the control unit of the AC rotating machine, proportional-integral calculation means 2, three-phase voltage instruction calculation means 3, PWM drive means 4, current detection means 7, current detection phase selection means 8, and coordinate conversion means 9 are formed by a microcomputer.

Currents flowing to respective phases U, V, and W of the three-phase AC rotating machine 10 are inputted into the current detection phase selection means 8 from the current detection means 7 that detects currents flowing to the respective phases of the three-phase AC rotating machine. The coordinate conversion means 9 calculates a motor position $\theta$ upon input of a signal from the position sensor 11 that detects a rotation position of the motor. The coordinate conversion means 9 finds detection currents Iq and Id of two axes, an axis q and an axis d, by making conversion to rotating orthogonal coordinate axes using current values DIu, DIv, and DIw inputted therein from the current detection phase selection means 8 and the motor position $\theta$.

The current instruction calculation means 1 calculates and outputs a q-axis target current TIq and a d-axis target current TId, which are instruction currents to drive the three-phase AC rotating machine.

A PI control calculation is applied to a deviation between the q-axis target current TIq from the current instruction calculation means 1 and the q-axis current Iq detected actually in the proportional-integral calculation means 2 as target voltage calculation means to find an instruction voltage Vq of the axis q. Likewise, a PI control calculation is applied to a deviation between the d-axis target current TId and the detected d-axis current Id to find a d-axis instruction voltage Vd.

The q-axis instruction voltage Vq and the d-axis instruction voltage Vd calculated in the proportional-integral calculation means 2 are inputted into the three-phase voltage instruction calculation means 3. The three-phase voltage instruction calculation means 3 converts the d- and q-axis instruction voltages to three-phase voltage instruction values Vu*, Vv* and Vw* to be applied to the three-phase AC rotating machine having phases U, V, and W of the motor by three-phase conversion, that is, by dq inverse transformation.

The three-phase voltage instruction calculation means 3 outputs a U-phase voltage instruction Vu*, a V-phase voltage instruction Vv*, and a W-phase voltage instruction Vw* to the PWM drive means 4.

The PWM drive means 4 converts the three-phase voltage instruction values Vu*, Vv*, and Vw* to duty ratios Du, Dv, and Dw, respectively, to perform pulse width modulation and outputs instructions Pu, Nu, Pv, Nv, Pw, and Nw to a drive circuit (hereinafter, referred to also as the inverter circuit) that drives the three-phase AC rotating machine.

As is known, the drive circuit (that is, the inverter circuit) driving the three-phase AC rotating machine is formed of first semiconductor switching elements 5H (5uH, 5vH, and 5wH) installed on the side of a DC voltage source 12 and second semiconductor switching elements 5L (5uL, 5vL, and 5wL) installed on the ground side, which are connected in series in pairs. Connection points of respective pairs of 5H and 5L are connected to the respective phases of the three-phase AC rotating machine 10. Conduction and non-conduction of the respective semiconductor switching elements 5H and 5L are controlled according to drive signals from the PWM drive means 4 and the drive circuit outputs three-phase voltages Vu, Vv, and Vw based on the three-phase voltage instruction values Vu*, Vv*, and Vw*, respectively, so that the drive circuit drives the motor by controlling an applied voltage to the three-phase AC rotating machine 10.

The PWM drive means 4 converts the U-phase voltage instruction Vu* to ON and OFF signals Pu and Nu by PWM modulation to turn ON and OFF the semiconductor switch 5uH and also to turn ON and OFF the semiconductor switch 5uL in antiphase to the semiconductor switch 5uH. Due to the ON-OFF actions of the semiconductor switch 5uH and the semiconductor switch 5uL, the drive circuit outputs a voltage by which the U-phase voltage Vu coincides with the U-phase voltage instruction Vu*. In other words, a DC voltage Vdc of the DC voltage source 12 is converted to a U-phase voltage Vu, which is an AC voltage, by ON-OFF actions of the semiconductor switch 5uH and the semiconductor switch 5uL. Also, a current detection resistor 6u to detect a U-phase current is connected between the semiconductor switch 5uL and the negative electrode side of the DC voltage source 12.

Likewise, the PWM drive means 4 converts the V-phase voltage instruction Vv* to ON and OFF signals Pv and Nv by PWM modulation to turn ON and OFF the semiconductor switch 5vH and also to turn ON and OFF the semiconductor switch 5vL in antiphase to the semiconductor switch 5vH. Due to the ON-OFF actions of the semiconductor switch 5vH and the semiconductor switch 5vL, the drive circuit outputs a voltage by which the V-phase voltage Vv coincides with the V-phase voltage instruction Vv*. Also, a current detection resistor 6v to detect a V-phase current is connected between the semiconductor switch 5vL and the negative electrode side of the DC voltage source 12.

Likewise, the PWM drive means 4 converts the W-phase voltage instruction Vw* to ON and OFF signals Pw and Nw by PWM modulation to turn ON and OFF the semiconductor switch 5wH and also to turn ON and OFF the semiconductor switch 5wL in antiphase to the semiconductor switch 5wH. Due to the ON-OFF actions of the semiconductor switch 5wH and the semiconductor switch 5wL, the drive circuit outputs a voltage by which the W-phase voltage Vw coincides with the W-phase voltage instruction Vw*. Also, a current detection resistor 6w to detect a W-phase current is connected between the semiconductor switch 5wL and the negative electrode side of the DC voltage source 12.

The current detection means 7 detects a potential difference across terminals of the current detection resistor 6u as a U-phase current digital value ADIu and also detects a potential difference across terminals of the current detection resistor 6v as a V-phase current digital value ADIv. Likewise, the current detection means 7 detects a potential difference across terminals of the current detection resistor 6w as a W-phase current digital value ADIw.

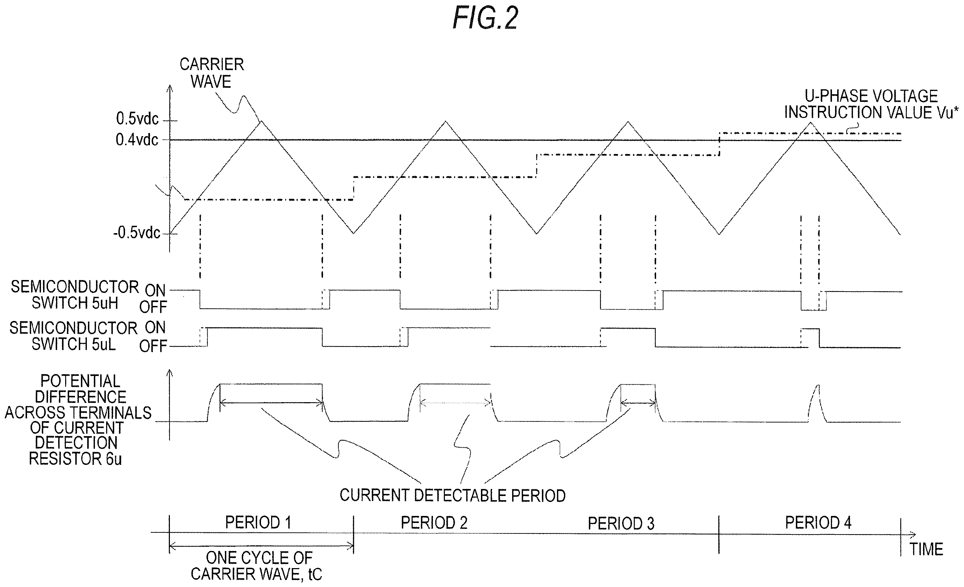

Fig. 2 is a view used to describe operations of the PWM drive means 4, the semiconductor switches 5uH and 5uL, and the current detection resistor 6u. Referring to Fig. 2, the abscissa is used for time in a case where the U-phase voltage instruction Vu* monotonically increases from a period 1 to a period 4.

A triangular signal in the top row of Fig. 2 represents a carrier wave as an internal signal of the PWM drive means 4. In a case where the carrier wave is larger than the U-phase voltage instruction Vu*, the PWM drive means 4 turns OFF the semiconductor switch 5uH and turns ON the semiconductor switch 5uL. In a case where the carrier wave is smaller than the U-phase voltage instruction Vu*, the PWM drive means 4 turns ON the semiconductor switch 5uH and turns OFF the semiconductor switch 5uL.

When the semiconductor switch 5uH and the semiconductor switch 5uL are turned ON simultaneously, the DC voltage source 12 short-circuits. This inconvenience is prevented by providing a delay of a predetermined time between rise timings at which the semiconductor switch 5uH and the semiconductor switch 5uL are turned ON. This delay time is known as a short circuit prevention time or a dead time.

The potential difference across the terminals of the current detection resistor 6u is proportional to the amplitude of a current passing the current detection resistor 6u. As can be understood from the fourth row of Fig. 2, a current passing the current detection resistor 6u is generated during an ON period of the semiconductor switch 5uL. Before and after the ON-OFF switching of the semiconductor switch 5uL takes place, the current changes its state to a transient state resulting from the ON-OFF actions.

In order to avoid the transient state, the current detection phase selection means 8 instructs the current detection means 7 to detect a potential difference across the terminals of the current detection resistor 6u near the timing at the crest of the carrier wave and to detect a U-phase current digital value ADIu by converting the detected potential difference from analog to digital form.

In the period 1 during which the U-phase voltage instruction Vu* is small, the ON period of the semiconductor switch 5uL is long and so is a period over which the U-phase current passes the current detection resistor 6u. Hence, the current detection means 7 can detect a U-phase current digital value while avoiding the transient state with ease.

When the U-phase voltage instruction Vu* takes a large value as is shown in the period 4, the ON period of the semiconductor switch 5uL becomes extremely short and a current passes the current detection resistor 6u only during the transient state at the ON-OFF switching. The current detection means 7 therefore becomes unable to detect the U-phase current from the potential difference across the terminals of the current detection resistor 6u. In the first embodiment, assume that the U-phase current cannot be detected from a potential difference across the terminals of the current detection resistor 6u in a case where the U-phase voltage instruction Vu* is larger than $0.4 \times$ Vdc.

A case of the phase U has been described with reference to Fig. 2. It goes without saying, however, that the same applies to the phase V and the phase W.

In the first embodiment, the DC voltage Vdc is multiplied by a coefficient of 0.4. However, the coefficient is not limited to 0.4. An output range of the three-phase voltage instructions Vu*, Vv*, and Vw* is ±0.5Vdc, which can be converted to a duty ratio as follows: -0.5Vdc = duty 0% and 0.5Vdc = duty 100%. When the coefficient of the U-phase voltage instruction value is changed from 0.4 to 0.5, that is, when the duty ratio is approximated to 100%, a current of the phase with the maximum value can no longer be detected.

The value of the DC voltage Vdc may be fixed to a value equivalent to a potential difference of the DC voltage source 12. Alternatively, potential of the DC voltage source 12 may be detected and Vdc may be given by the detected value.

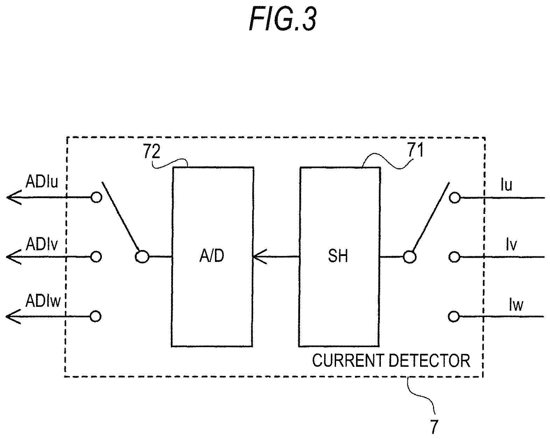

Fig. 3 is a view used to describe the current detection means 7. The current detection means 7 of the first embodiment is formed of one sample-and-hold circuit 71 and one analog-to-digital conversion circuit (hereinafter, referred to also as the A/D conversion means) 72.

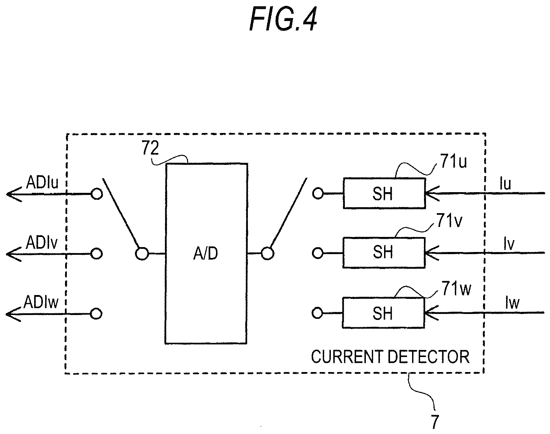

Even in a case where there is only one analog-to-digital conversion circuit 72, the current detection means 7 can simultaneously hold potential differences across the terminals of the three current detection resistors 6u, 6v, and 6w when there are as many sample-and-hold circuits 71 as the phases of the motor as is shown in Fig.4. Hence, it can be said that the current detection means 7 can detect three potential differences across the terminals at a same time.

However, in a case as shown in Fig. 3 where the current detection means 7 includes only one sample-and-hold circuit 71, it is impossible to simultaneously detect potential differences across the terminals of the three current detection resistors 6u, 6v, and 6w by one sample-and-hold circuit.

Assume that a time tADC, which is a sum of a time the sample-and-hold circuit 71 requires for processing by the current detection means 7 shown in Fig. 3 and a time the analog-to-digital conversion circuit 72 requires for the processing, and a time tC of one cycle of the carrier wave satisfy a relation expressed by Equation (1) as follows:

$$tADC = 0.04 \times tC \quad \ldots(1).$$

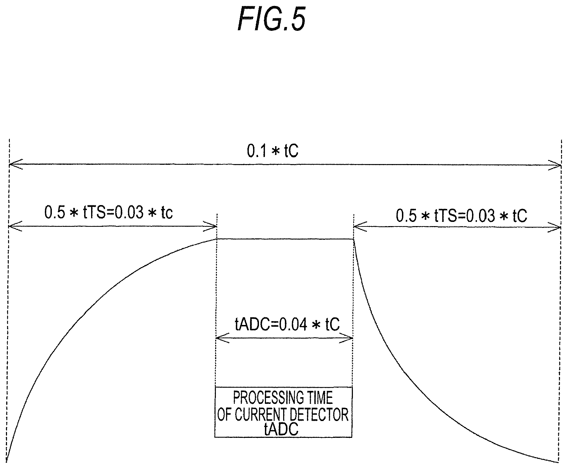

Also, as is shown in Fig. 5, the transient state resulting from the ON-OFF switching of the semiconductor switch occurs in the potential differences across the terminals of the current detection resistors 6u, 6v, and 6w. Given tS = 0.06tC as a sum of a time of the transient state at the rising by the ON switching and a time of the transient state at the falling by the OFF switching, then a time tDT required for current value detection processing of one phase is expressed by Equation (2) as follows:

$$tDT = tADC + tTS = 0.04 \times tC + tTS = 0.1tC \quad \ldots(2).$$

By converting the result to a duty ratio, we obtain: (0.5 - 0.1)Vdc = 0.4Vdc = 90%.

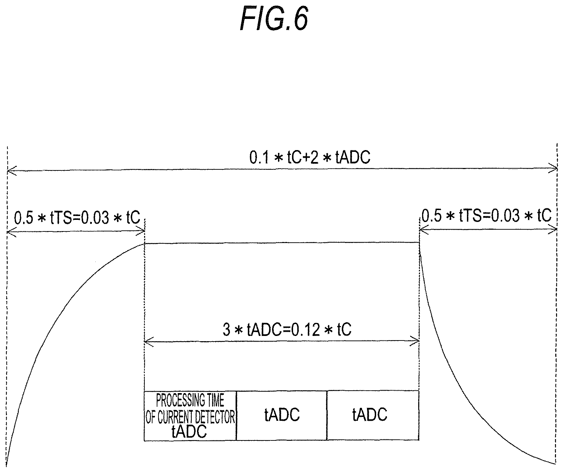

In a case where the current detection means 7 includes only one sample-and-hold circuit 71 as is shown in Fig. 3, a time t3DT required for the current value detection processing of three phases is as shown in Fig. 6 and expressed by Equation (3) as follows:

$$t3DT = 3tADC + tTS = 0.12 \times tC + tTS = 0.18tC \quad \ldots(3).$$

By converting the result to a duty ratio, we obtain: (0.5 - 0.18)Vdc = 0.32Vdc = 82%.

In view of the foregoing, the current values of all phases can be detected in a case where the voltage instruction values of all phases are smaller than 0.32Vdc (in terms of duty ratio: 82%). However, in other words, the current values of all of the three phases cannot be detected in a case where the voltage instruction values of all phases are equal to or larger than 0.32Vdc (in terms of duty ratio: 82%).

To overcome this inconvenience, this embodiment provides a technique through application of the invention that makes it possible to detect current values of all of the three phases when the voltage instruction values (duty ratios) are larger and also to detect current values of at least two phases when the voltage instruction values (duty ratios) are further larger.

The first embodiment will be described more in detail in the following.

As has been described above, in a case where the voltage instruction value of one phase is larger than 0.4Vdc (in terms of duty ratio: 90%), the current value of this phase cannot be detected. In short, the current values can be detected but not in all of the three phases.

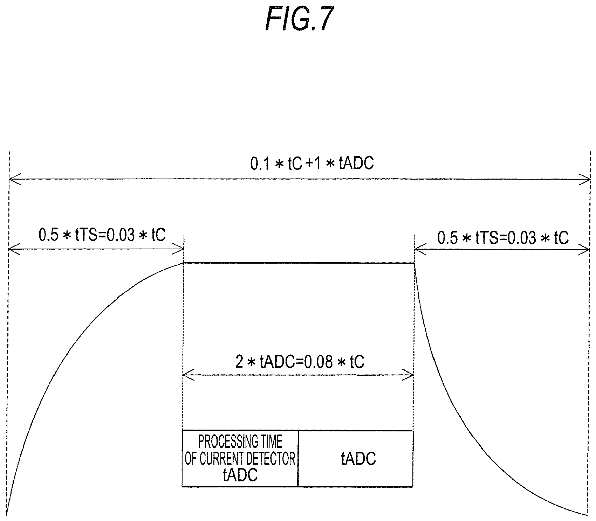

A time t2DT the current detection means 7 requires for the current value detection processing of two phases is as shown in Fig. 7 and expressed by Equation (4) as follows:

$$t2DT = 2tADC + tTS = 0.08 \times tC + tTS = 0.14tC \quad \ldots(4).$$

By converting the result to a duty ratio, we obtain: (0.5 - 0.14)Vdc = 0.36Vdc = 86%.

In a case where the voltage instruction value of the phase with the second largest voltage instruction value is larger than 0.36Vdc (in terms of duty ratio: 86%), it is also impossible to secure a time to detect current values of both of the phase with the largest voltage instruction value and the phase with the second largest voltage instruction value.

In short, the current values can be detected but not in all of the three phases.

There is no case where the voltage instruction values of all of the three phases are larger than 0.36Vdc (in terms of duty ratio: 86%). It is therefore apparent that the current instruction value of the phase with the third largest voltage instruction value becomes smaller than 0.36Vdc. In other words, there is no need to secure a time to detect the current values of the three phases expressed by Equation (3) above.

Hence, by configuring in such a manner that the current detection phase selection means 8 determines whether the voltage instruction value of the phase with the second largest voltage instruction value is equal to or smaller than 0.36Vdc (in terms of duty ratio: 86%) and controls the timing of the current value detection processing performed by the current detection means 7 according to the voltage instruction value (duty ratio) as will be described below, it becomes possible to detect the currents of all of the three phases within one cycle of the carrier wave.

For example, the current value detection processing of the phase with the largest voltage instruction value is performed near the center of the PWM pulse, that is, near the crest of the PWM carrier wave. Subsequently, the current value detection processing of the phase with the second largest voltage instruction value is performed. In this manner, the current detection phase selection means 8 controls the current value detection processing timing so that the current value detection processing timing of the phase with the second largest voltage instruction value falls within the time expressed by Equation (4) above. As has been described above, it is apparent that the current instruction value of the phase with the third largest voltage instruction value becomes smaller than 0.36Vdc. Hence, by configuring in such a manner that the current detection phase selection means 8 controls the current value detection processing timing so that the current value detection processing of the phase with the third largest voltage instruction value is performed following the current value detection processing of the phases with the largest and second largest voltage instruction values, it becomes possible to detect the currents of all of the three phases within one cycle of the carrier wave.

Further, a description will be given to a method of detecting the current values of two phases in a case where the voltage instruction value of the phase with the second largest voltage instruction value is larger than 0.36Vdc (in terms of duty ratio: 86%).

In a case where the voltage instruction value of one phase among the voltage instruction values of three phases is larger than 0.4Vdc (in terms of duty ratio: 90%), the current value of this phase cannot be detected. Hence, the current value of the phase with the largest voltage instruction value is not detected at the timing within one cycle of the carrier wave. In a case where the voltage instruction value of the phase with the largest voltage instruction value is larger than 0.4Vdc, the voltage instruction value of the phase with the second largest voltage instruction value is equal to or smaller than 0.4Vdc. Hence, a time to detect the current value can be secured. Accordingly, by configuring in such a manner that the current detection phase selection means 8 controls the timing of the current value detection processing so that the current value detection processing of the phase with the second largest voltage instruction value is performed near the center of the PWM pulse followed by the current value detection processing of the phase with the third largest voltage instruction value, it becomes possible to perform the current value detection processing of at least the phases with the second largest voltage instruction value and the third largest voltage instruction value.

Also, in a case where the voltage instruction value of the phase with the second largest voltage instruction value is larger than 0.36Vdc as in the case above, even when the voltage instruction value of the phase with the largest voltage instruction value is equal to or smaller than 0.4Vdc, it is impossible to secure a time to detect the current values of both of the phases with the largest voltage instruction value and the second largest voltage instruction value. In this case, too, by configuring in such a manner that the current detection phase selection means 8 controls the timing of the current value detection processing in the same manner as above so that the current value detection processing of the phase with the second largest voltage instruction value is performed at the trough near the center of the PWM pulse followed by the current value detection processing of the phase with the third largest voltage instruction value, it becomes possible to perform the current value detection processing of at least the phases with the second largest voltage instruction value and the third largest voltage instruction value.

As has been described above, by controlling the timing at which to perform the current value detection processing according to the voltage instruction values (duty ratios) through application of the invention, it becomes possible to detect the current values of two phase in a reliable manner.

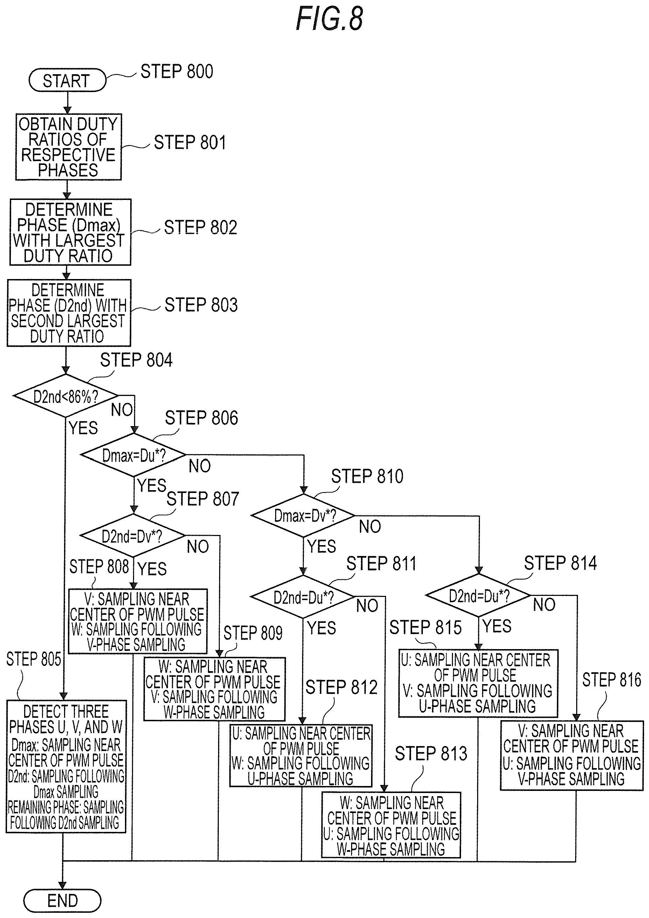

An operation of the first embodiment will now be described according to a flowchart of Fig. 8.

Fig. 8 is a flowchart depicting a processing content of the current detection phase selection means 8.

Firstly, the voltage instruction values of the respective phases are obtained in STEP 801. In this instance, the voltage instruction values Vu*, Vv*, and Vw* calculated in the three-phase voltage instruction calculation means 3 shown in Fig. 1 may be obtained or the duty ratio setting values of the three phases, Du, Dv, and Dw, outputted from the PWM drive means 4 may be obtained. Herein, a description will be given in a case where the three-phase duty ratio setting values Du, Dv, and Dw are obtained.

Subsequently in STEP 802, a phase set with the largest duty ratio, that is, a duty ratio Dmax closest to a duty ratio of 100%, is determined among the three-phase duty ratio setting values Du, Dv, and Dw.

Likewise, in STEP 803, a phase set with the second largest duty ratio D2nd is determined (STEP 803).

In a case where the value of D2nd determined in STEP 803 is smaller than 86%, it is possible to secure a sufficient time to detect the current values of two phases: the phase with the largest duty ratio and the phase with the second largest duty ratio, as expressed by Equation (4) above. Further, it is apparent that the ON period of the semiconductor switch 5uL, 5vL, or 5wL becomes longer in the phase with the smallest duty ratio than those in the other two phases. It is therefore also possible to secure a sufficient time to detect the current value of the phase with the third largest duty ratio.

Hence, it is only necessary in STEP 804 to determine whether D2nd is smaller than 86% or not and there is no need to make a determination on Dmax as to whether a time to detect the current value of one phase can be secured. In short, in a case where D2nd is smaller than 86%, it is possible to perform current value detection processing for all of the three phases U, V, and W.

In STEP 805, the control is performed so that the current value detection processing of a phase with the largest duty ratio, that is, a phase for which the ON period of the semiconductor switch 5L is the shortest and a period during which a current can be detected from the potential difference across terminals of the current detection element 6 is the shortest, is performed near the center of the PWM pulse.

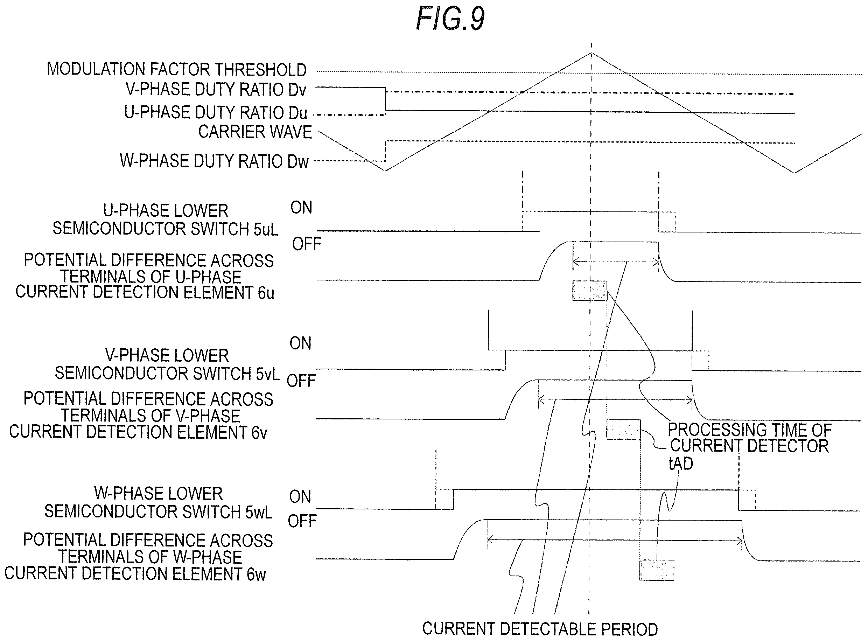

Subsequently, the control is performed so that the current value detection processing of a phase with the second largest duty ratio is performed, followed finally by the current value detection processing of the remaining phase. Herein, given that the phase Dmax with the largest duty ratio is the phase U, the phase D2nd with the second largest duty is the phase V, and the phase with the third largest duty is the phase W. Then, a relation of the carrier wave, duty ratios of the respective phases, ON and OFF instructions to the semiconductor switches 5uL, 5vL, and 5wL of the respective phases, and a potential difference across the terminals of the current detection element 6 is as shown in Fig. 9.

The ON period of the semiconductor switch 5uL of the phase U as the phase with the largest duty ratio is the shortest, and a period during which the U-phase current can be detected from the potential difference across terminals of the current detection element 6u is the shortest. Hence, in order to perform the current value detection processing in a more reliable manner, it is desirable to perform the control so that the current value detection processing is performed near the center of the PWM pulse. For the same reason, it is desirable to subsequently perform the current value detection processing of the phase V as the phase with the second largest duty ratio, followed finally by the current value detection processing of the remaining phase W.

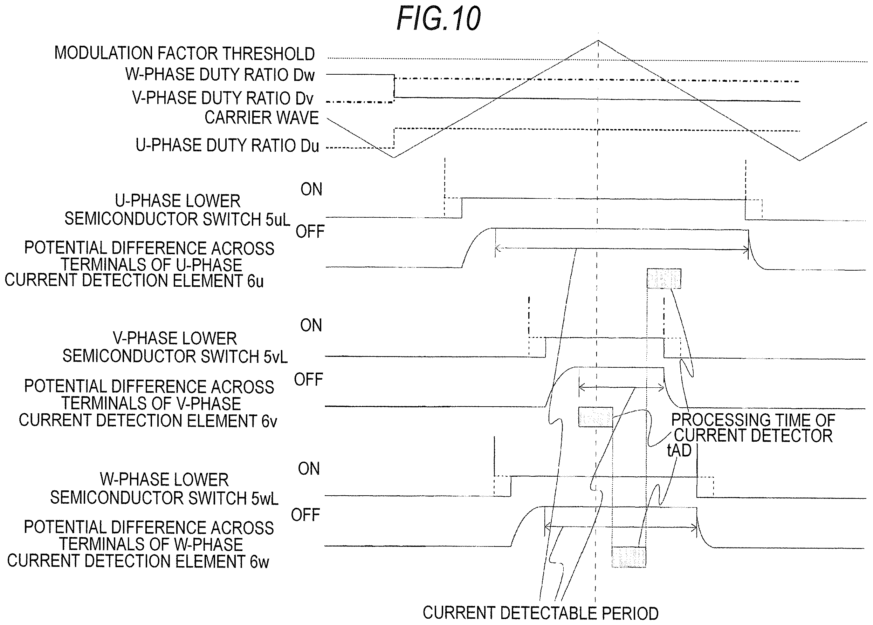

In a case as is shown in Fig. 10 where the phase Dmax with the largest duty ratio is the phase V, the phase D2nd with the second largest duty is the phase W, and the phase with the third largest duty is the phase U, the current values cannot be detected at the timing of the current value detection processing shown in Fig. 9.

To overcome this inconvenience, the timing, including the order in which to perform the current value detection processing, is made variable in the invention, so that, as has been described above, the current value detection processing of the phase with the largest duty ratio is performed first near the center of the PWM pulse, followed by the current value detection processing of the phase with the second largest duty ratio and finally the current value detection processing of the remaining phase. In other words, in a case where Dmax is the phase V, the current value detection processing of the phase V is performed first followed by the current value detection processing of the phase W and the phase U in this order.

In this manner, by making the current value detection processing timing variable, it becomes possible to detect the current values in all of the three phases U, V, and W in a case where D2nd is smaller than 86%.

In a case where D2nd is larger than 86%, because the current value detection processing of the phase with the largest duty ratio is not performed, it is necessary to determine which phases are the phase with the largest duty ratio and the phase with the second largest duty ratio.

In a case where it is determined that Dmax = phase U (STEP 806) and D2nd = phase V (STEP 807), the current value detection processing of the phase U with the largest duty ratio is not performed for the reason described above. In order to perform the current detection in a more reliable manner, it is desirable to perform the control so that the current value detection processing of the phase V with the second largest duty ratio is performed near the center of the PWM pulse followed by the current value detection processing of the phase W with the third largest duty ratio (Step 808).

Likewise, in a case where it is determined that D2nd ≠ phase V (STEP 807), the current value detection processing of the phase U with the largest duty ratio is not performed. In order to detect the current values in a more reliable manner, it is desirable to perform the control so that the current value detection processing of the phase W with the second largest duty ratio is performed near the center of the PWM pulse followed by the current value detection processing of the phase V with the third largest duty ratio (STEP 809).

A case where Dmax = phase U has been described according to the flowchart. It should be appreciated, however, that the same applies to the other phases.

In a case where it is determined that Dmax = phase V (STEP 810) and D2nd = phase U (STEP 811), it is desirable to perform the control so that the current value detection processing of the phase U with the second largest duty ratio is performed near the center of the PWM pulse followed by the current value detection processing of the phase W with the third largest duty ratio (STEP 812). In a case where it is determined that Dmax = phase V (STEP 810) and D2nd ≠ phase U (STEP 811), it is desirable to perform the control so that the current value detection processing of the phase W with the second largest duty ratio is performed near the center of the PWM pulse followed by the current value detection processing of the phase U with the third largest duty ratio (STEP 813).

In a case where it is determined that Dmax ≠ phase V (STEP 810) and D2nd = phase U (STEP 814), it is desirable to perform the control so that the current value detection processing of the phase U with the second largest duty ratio is performed near the center of the PWM pulse followed by the current value detection processing of the phase V with the third largest duty ratio (STEP 815). In a case where it is determined that Dmax ≠ phase V (STEP 810) and D2nd ≠ phase U (STEP 814), it is desirable to perform the control so that the current value detection processing of the phase V with the second largest duty ratio is performed near the center of the PWM pulse followed by the current value detection processing of the phase U with the third largest duty ratio (STEP 816).

The above has described the technique by which the three-phase duty ratio setting values Du, Dv, and Dw are obtained and the timing at which to perform the current value detection processing of the respective phases is controlled by determining a duty ratio Dmax of the phase with the largest duty ratio and a duty ratio D2nd of the phase with the second largest duty ratio. However, the timing at which to perform the current value detection processing of the respective phases may be performed by obtaining the voltage instruction values Vu*, Vv*, and Vw* calculated in the three-phase voltage instruction calculation means 3.

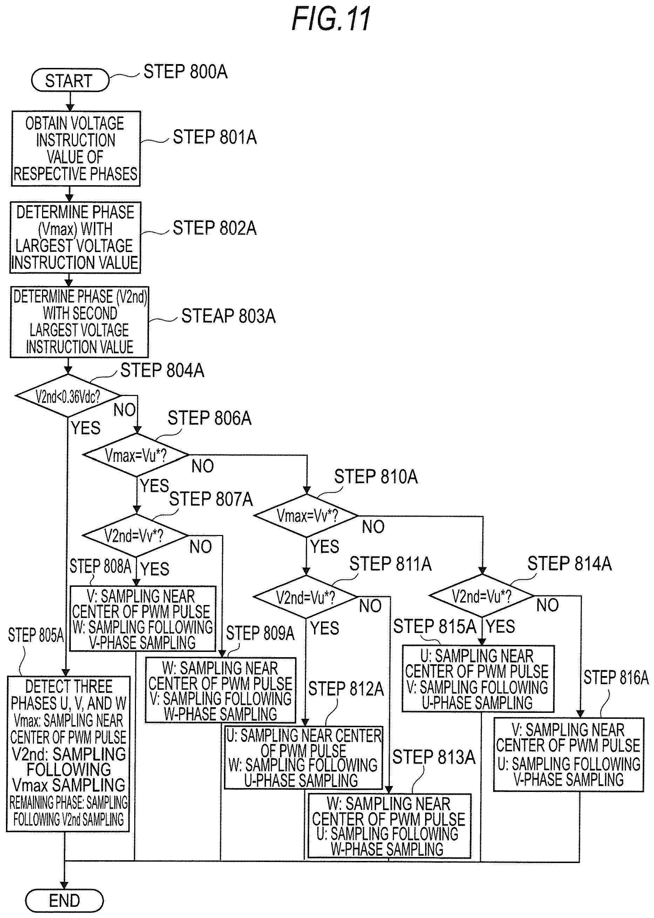

Fig. 11 shows a flowchart depicting an operation in this case. Because the content of Fig. 11 is the same as the content of the flowchart of Fig. 8 described above, a detailed description is omitted herein by attaching a capital A at the end of the numbers denoting the respective flows.

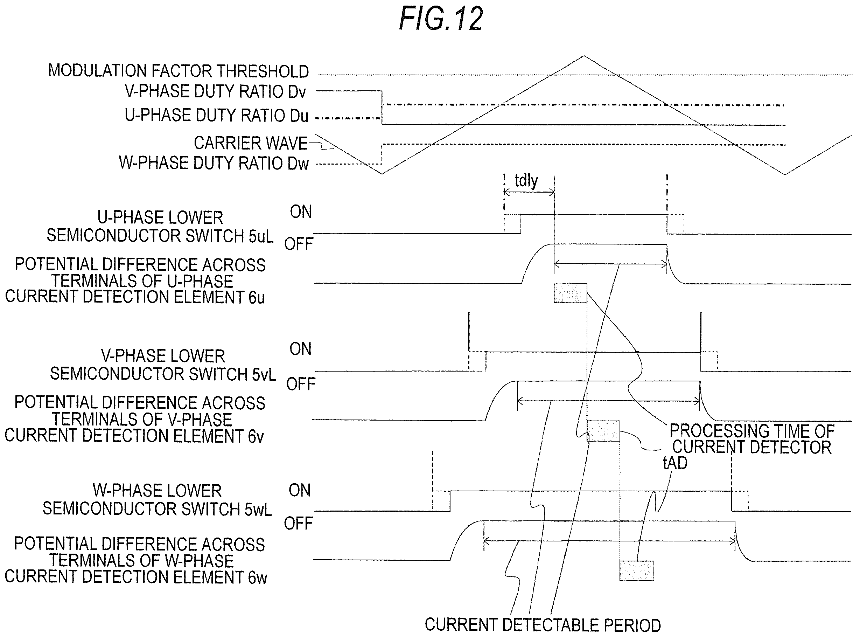

According to the description of the flowchart of Fig. 8, in order to perform the current detection in a more reliable manner, the current value detection processing for the current value of the phase with the largest duty ratio or the current value of the phase with the second largest duty ratio is performed near the center of the PWM pulse. However, as is shown in Fig. 12, the current value detection processing for the current value may be started after an elapse of a predetermined time tdly since the ON timing of the PWM pulse. In this case, too, it is possible to detect the current values in a reliable manner.

As has been described, according to the first embodiment of the invention, the current detection phase selection means 8 obtains the voltage instruction values Vu*, Vv*, and Vw* calculated in the three-phase voltage instruction calculation means 3 or the three-phase duty ratio setting values Du, Dv, and Dw outputted from the PWM drive means 4, and selects the phase for which the current value detection processing is to be performed and controls the processing timing for the respective phases according to the instruction values or the setting values. Hence, even in a case where the current detection means 7 includes only one sample-and-hold circuit 71, it is possible to detect the currents of all of the three phases in a case where the voltage instruction values or the duty ratios are small.

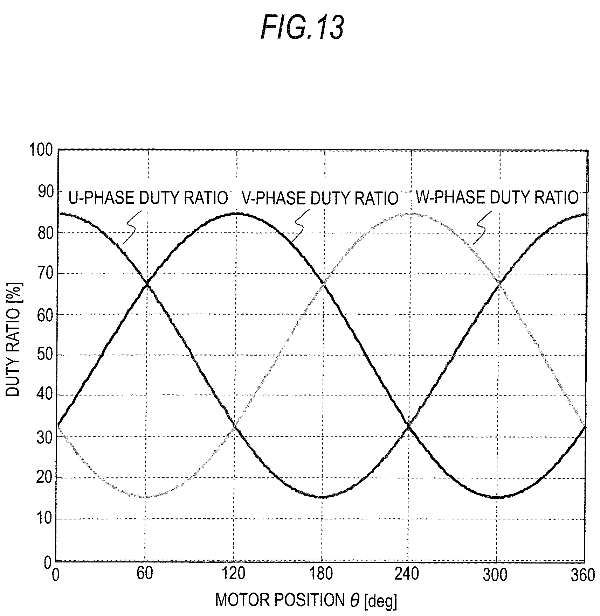

For example, under the control in a case where the duty ratios are small as is shown in Fig. 13, contrarily to the power conversion device in the related art described in PTL 3 that performs the current value detection processing always only for two phases, it becomes possible to always detect the current values of all of the three phases. Hence, the AC rotating machine can be controlled with accuracy by a steering operation with a small steering force, such as a steering operation near the central point of the steering wheel and a steering operation when the steering wheel is merely touched gently. Consequently, feeling can be enhanced in an electrical power steering apparatus adopting the invention in comparison with a case where the invention is not adopted.

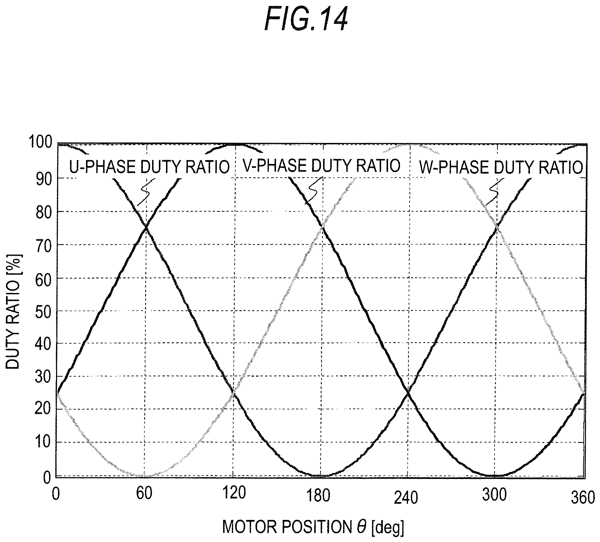

Also, even in a case where the duty ratios are large as is shown, for example, in Fig. 14, currents of two phases other than the phase with the largest duty ratio can be detected. Hence, even at a high output with the duty ratio achieving 100%, it is possible to realize the performance equivalent to that of the power conversion device in the related art described in PTL 3 that always performs the current value detection processing only for two phases.

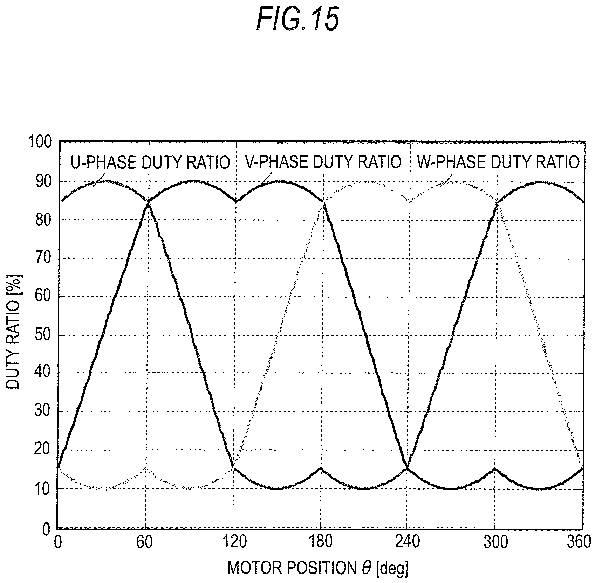

Further, in a case as is shown, for example, in Fig. 15 where modulation control aiming at a high output is performed in the three-phase voltage instruction calculation means 3 instead of normal sine-wave modulation, there is a possibility that a relation of a duty ratio and an electrical angle of the AC rotating machine cannot be determined uniquely. In this case, however, by controlling the timing at which to perform the current value detection processing according to the duty ratio, it also becomes possible to control a high-output power conversion device with accuracy.

Also, because multiple triangular carrier waves are not necessary, it is possible to detect the current values of all of the three phases or the current values of two current-value detectable phases at one timing of one triangular carrier wave, for example, at the trough of the triangular carrier wave. Hence, the currents can be controlled in cycles faster than those of the power conversion device described in PTL 4 that is provided with multiple triangular carrier waves. In addition, it becomes possible to obtain a power conversion device capable of controlling an AC rotating machine with accuracy using an inexpensive microcomputer in comparison with a microcomputer capable of generating multiple triangular carrier waves.

Second Embodiment

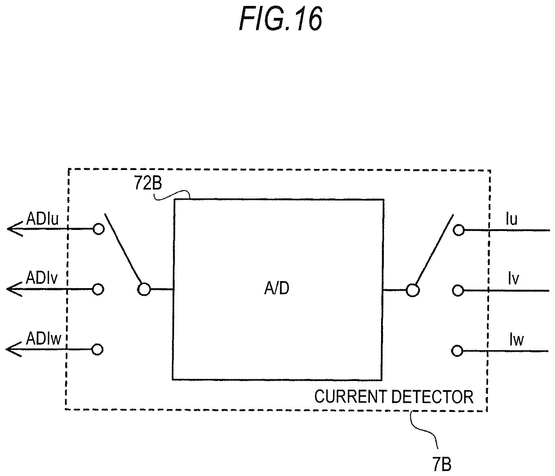

In the first embodiment above, the current detection means 7 is formed of a sample-and-hold circuit and an analog-to-digital conversion circuit as is shown in Fig. 3. However, even in a case as is shown in Fig. 16 where the current detection means 7 is formed of an analog-to-digital conversion circuit alone without including any sample-and-hold circuit, it is possible to obtain advantages same as those of the first embodiment above by performing the control in the same manner as in the first embodiment above.

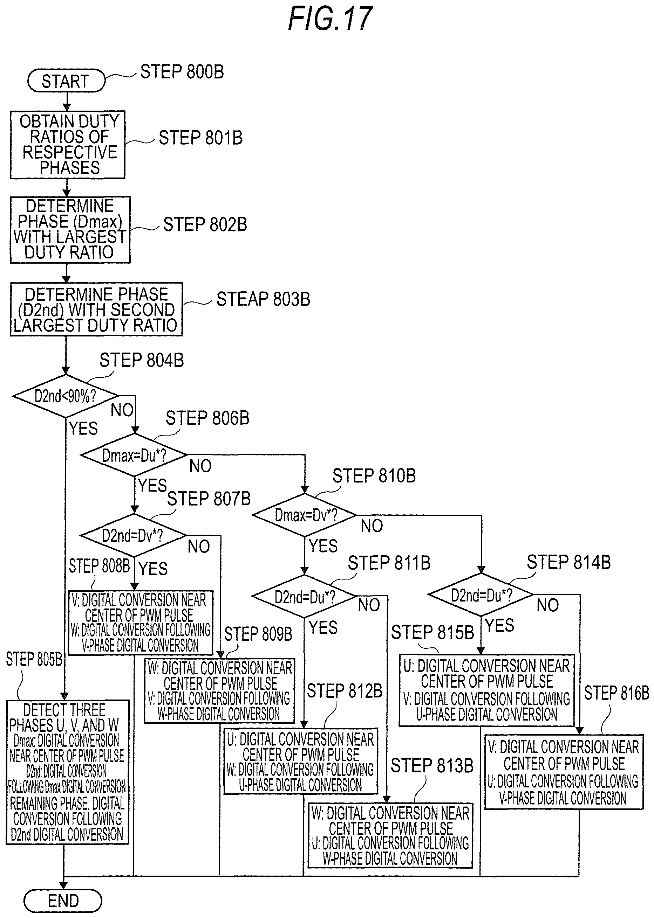

In a case where the sample-and-hold circuit is included, at which timing the current value detection processing, including the sampling processing of the current detection value, is to be performed is determined according to the respective duty ratios. However, in a case where the sample-and-hold circuit is not included as in the second embodiment, it is sufficient to determine as to at which timing the current detection value is to be converted from analog to digital form according to the respective duty ratios. Fig. 17 shows a flowchart depicting an operation in this case.

An operation of Fig. 17 is the same as those of the flowcharts of Figs. 8 and 11 described above. Hence, a detailed description is omitted herein by attaching a capital B at the end of the numbers denoting the respective flows of Fig. 17.

In Equation (1) of the first embodiment above, tADC is given as a sum of the time the sample-and-hold circuit 71 requires for the processing by the current detection means 7 shown in Fig. 3 and the time the analog-to-digital conversion circuit 72 requires for the processing. Accordingly, a time tADCB required for the current detection processing in a case where the sample-and-hold circuit is not included becomes shorter than the time tADC required for the current detection processing in a case where the sample-and-hold circuit is included.

In a case where the second embodiment uses a microcomputer capable of selecting whether the sample-and-hold circuit is present or not, adopting the configuration that does not include the sample-and-hold circuit means that values found in accordance with Equations (1), (2), (3), and (4) above become smaller. In other words, it means that the voltage instruction value 0.36Vdc (in terms of duty ratio: 86%) of the phase with the second largest voltage instruction value described by way of example in the first embodiment above becomes larger. That is, there can be achieved an advantage that the current values of all of the three phases can be detected in a case where the voltage instruction values or duty ratios are further larger.

For example, in the second embodiment, a time current detection means 7B shown in Fig. 16 requires for the processing is only a time an analog-to-digital conversion circuit 72B requires for the processing. Hence, assume that tADCB and a time tC of one cycle of the carrier wave are half the time expressed by Equation (1) above, that is, satisfy the relation expressed by Equation (5) as follows:

$$tADCB = 0.02 \times tC \quad …(5).$$

Given that a sum of a time of the transient state at the rising by the ON switching and a time of the transient state at the falling by the OFF switching is invariable, that is, tTS = 0.06tC. Then, a time tDTB required for the current value detection processing of one phase is expressed by Equation (6) as follows:

$$tDTB = tADCB + tTS = 0.02 \times tC + tTS = 0.08tC \quad …(6).$$

Hence, a time t2DTB required for the current value detection processing of two phases is expressed by Equation (7) as follows:

$$t2DTB = 2tADCB + tTS = 0.04 \times tC + tTS = 0.1tC \quad …(7).$$

By converting the result into a duty ratio, we obtain: (0.5 - 0.1)Vdc = 0.4Vdc = 90%.

As has been described above, according to the second embodiment of the invention, in a case where the configuration excluding the sample-and-hold circuit is adopted, as is depicted in the flowchart of Fig. 17, by controlling the timing of the current value detection processing performed by the current detection means 7B according to the voltage instruction values (duty ratios), it becomes possible to detect the currents of all of the three phases within one cycle of the carrier wave in a case where the voltage instruction value of the phase with the second largest voltage instruction value is equal to or smaller than 0.4Vdc (in terms of duty ratio: 90%) .

Third Embodiment

In the first embodiment above, the current detection means 7 is formed of one sample-and-hold circuit 71 and one analog-to-digital conversion circuit 72 as is shown in Fig. 3. A third embodiment will describe a case where current detection means 7C is formed of two sample-and-hold circuits and two analog-to-digital conversion circuits.

A difference of the third embodiment from the first embodiment above is the current detection means 7 as described above and the current detection phase selection means 8, and a description will be given only to the difference.

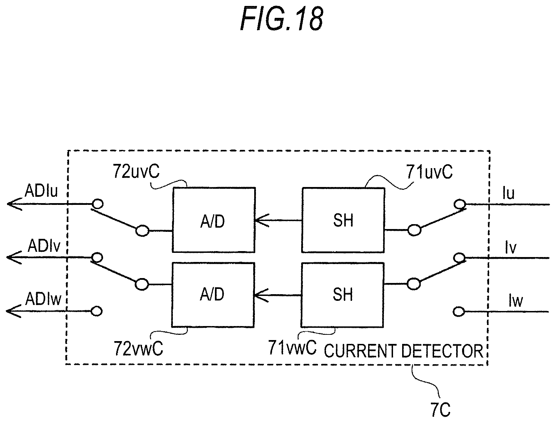

Fig. 18 is a view in a case where the current detection means 7C is formed of two sample-and-hold circuits 71uvC and 71vwC and two analog-to-digital conversion circuits 72uvC and 72vwC and includes at least one input terminal from which inputs can be made to the both sample-and-hold circuits and at least one output terminal from which outputs can be made from the both analog-to-digital conversion circuits. In a case where it is configured in such a manner that at least one input terminal and one output terminal can be connected to the both sample-and-hold circuits and the both analog-to-digital conversion devices, respectively, currents of two phases can be detected at the same timing without fail.

For example, assume that a time tADCC, which is a sum of a time the sample-and-hold circuits 71uvC and 71vwC require for the processing by the current detection means 7C shown in Fig. 18 and a time the analog-to-digital conversion circuits 72uvC and 72vwC require for the processing, and a time tC of one cycle of the carrier wave satisfy a relation same as the one expressed by Equation (1) above. Then, a time tDT required for the current value detection processing of one phase is also expressed by Equation (2) above.

By converting the result to a duty ratio, we obtain: (0.5 - 0.1) Vdc = 0.4Vdc = 90%. In a case where the current detection means is formed of two sample-and-hold circuits and two analog-to-digital conversion circuits, it is possible to detect currents of two phases within the time tDT required for the current value detection processing of one phase.

Also, as has been described above, there is no case where the voltage instruction values of all of the three phases become larger than 0.4Vdc (in terms of duty ratio: 90%). It is therefore apparent that the current instruction value of the phase with the third largest voltage instruction value becomes smaller than 0.4Vdc.

Hence, whether the voltage instruction value of the phase with the largest voltage instruction value is equal to or smaller than 0.4Vdc (in terms of duty ratio: 90%) is determined, and then the current values of the phase with the largest voltage instruction value and the phase with the second largest voltage instruction value are detected using different sample-and-hold circuits and different analog-to-digital conversion circuits. Herein, currents of all of the three phases can be detected by controlling the timing of the current value detection processing so that the current value of the phase with the third largest voltage instruction value is detected following a detection of the current value of the phase with the largest voltage instruction value and subsequently a detection of the current value of the phase with the second largest voltage instruction.

Also, in a case where the voltage instruction value of the phase with the largest voltage instruction value is larger than 0.4Vdc (in terms of duty ratio: 90%), it becomes possible to perform the current value detection processing of the phases with the second and third largest voltage instruction values simultaneously using two conversion devices by determining the phase with the largest voltage instruction value and by appropriately selecting the circuit to perform sample-and-hold processing and the circuit to perform analog-to-digital conversion, for example, of the phase V of Fig. 18.

As has been described above, by selecting the phase for which the current value detection processing is to be performed and controlling the processing timing according to the voltage instruction value (duty ratio) of the phase with the largest voltage instruction value through application of the invention, it becomes possible to detect the currents of all of the three phases in a case where the voltage instruction value (duty ratio) is equal to or smaller than a predetermined value. Even in a case where the voltage instruction value (duty ratio) is larger than the predetermined value, it becomes possible to detect the current values of two phases in a reliable manner.

Hereinafter, the third embodiment will be described in detail.

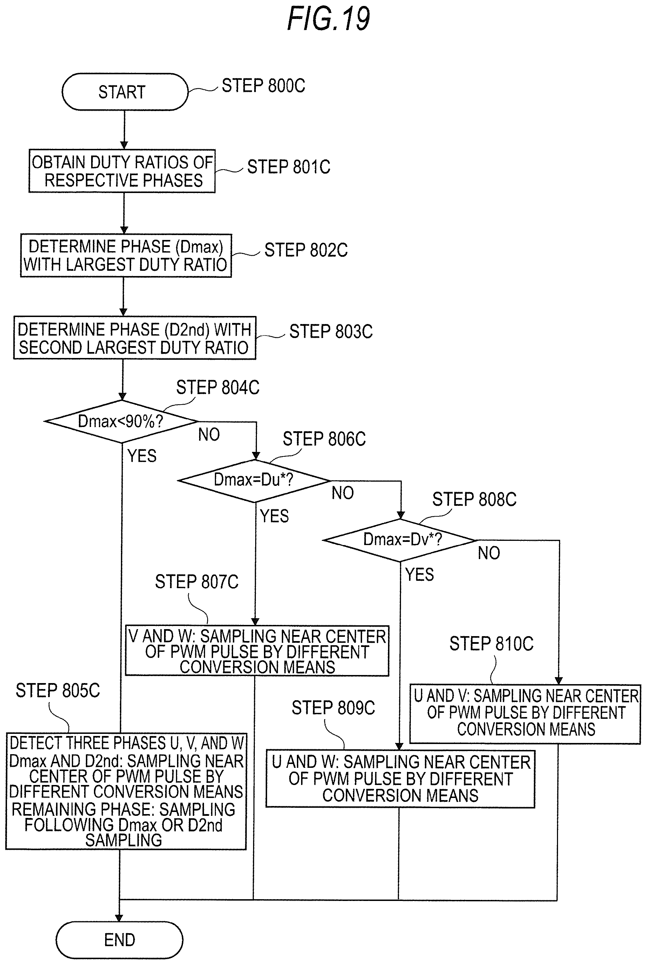

Fig. 19 is a flowchart used to describe a processing content of the current detection phase selection means 8.

Firstly, the voltage instruction values of the respective phases are obtained in STEP 801C. In this instance, the voltage instruction values Vu*, Vv*, and Vw* calculated in the three-phase voltage instruction calculation means 3 shown in Fig. 1 may be obtained or the duty ratio setting values of the three phases, Du, Dv, and Dw, outputted from the PWM drive means 4 may be obtained. Herein, a description will be given in a case where the three-phase duty ratio setting values Du, Dv, and Dw are obtained.

Subsequently in STEP 802C, a phase set with the largest duty ratio, that is, a duty ratio Dmax closest to a duty ratio of 100% is determined among the three-phase duty ratio setting values Du, Dv, and Dw. Likewise, a phase set with the second largest duty ratio D2nd is determined in STEP 803C.

In a case where the value of Dmax determined in STEP 802C is smaller than 90%, it is possible to secure a sufficient time to detect the current value of one phase as is expressed by Equation (2) above. Also, in a case where the current detection means is formed of two sample-and-hold circuits and two analog-to-digital conversion circuits, a time for the current value detection processing of two phases can be secured.

Further, it is apparent that the ON period of the semiconductor switch 5uL, 5vL, or 5wL becomes longer in the phase with the smallest duty ratio than those in the other two phases. It is therefore also possible to secure a sufficient time to perform the current value detection processing of the phase with the third largest duty ratio following the current value detection processing of the phase with the largest duty ratio and the phase with the second largest duty ratio.

Hence, it is only necessary in STEP 804C to determine whether Dmax is smaller than 90% or not and the current value detection processing is performed for all of the three phases U, V, and W in a case where Dmax is smaller than 90%.

In STEP 805C, the current detection phase selection means 8 performs control so that the current value detection processing of the phase with the largest duty ratio, that is, the phase for which the ON period of the semiconductor switch 5L is the shortest and a period during which the current can be detected from the potential difference across the terminals of the current detection element 6 is the shortest, and the current value detection processing of the phase with the second largest duty ratio are performed simultaneously near the center of the PWM pulse. The current detection phase selection means 8 performs the control so that the current value detection processing of the remaining phase is performed subsequently.

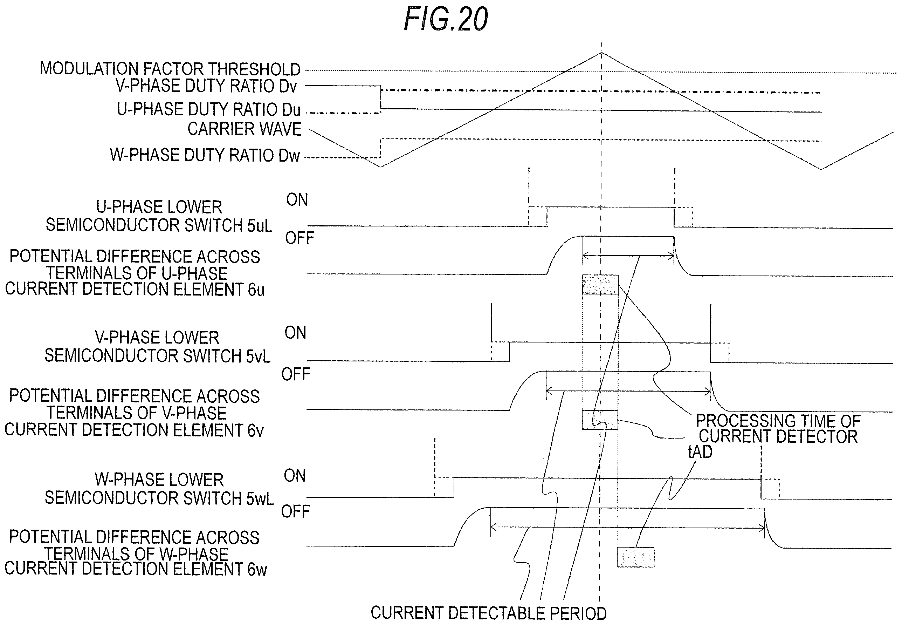

Given that the phase Dmax with the largest duty ratio is the phase U, the phase D2nd with the second largest duty is the phase V, and the phase with the third largest duty is the phase W. Then, a relation of the carrier wave, duty ratios of the respective phases, ON and OFF instructions to the semiconductor switches 5uL, 5vL, and 5wL of the respective phases, and a potential difference across the terminals of the current detection element 6 is shown in Fig. 20.

The ON period of the semiconductor switch 5uL of the phase U as the phase with the largest duty ratio is the shortest, and a period during which the U-phase current can be detected from the potential difference across the terminals of the current detection element 6u is the shortest. Hence, by controlling the current detection phase selection means 8 so that the current value detection processing of the phase U is performed by the sample-and-hold circuit 71uvC and the current value detection processing of the phase V is performed by the sample-and-hold circuit 71vwC in the current detection means 7C shown in Fig. 18, it becomes possible to simultaneously perform the current value detection processing of the phase with the largest duty ratio and the phase with the second largest duty ratio.

In order to perform the current detection in a more reliable manner, it is desirable to perform the control so that the current value detection processing is performed near the center of the PWM pulse. For the same reason, it is desirable to perform the control so that the current value detection processing of the remaining phase W is performed subsequently.

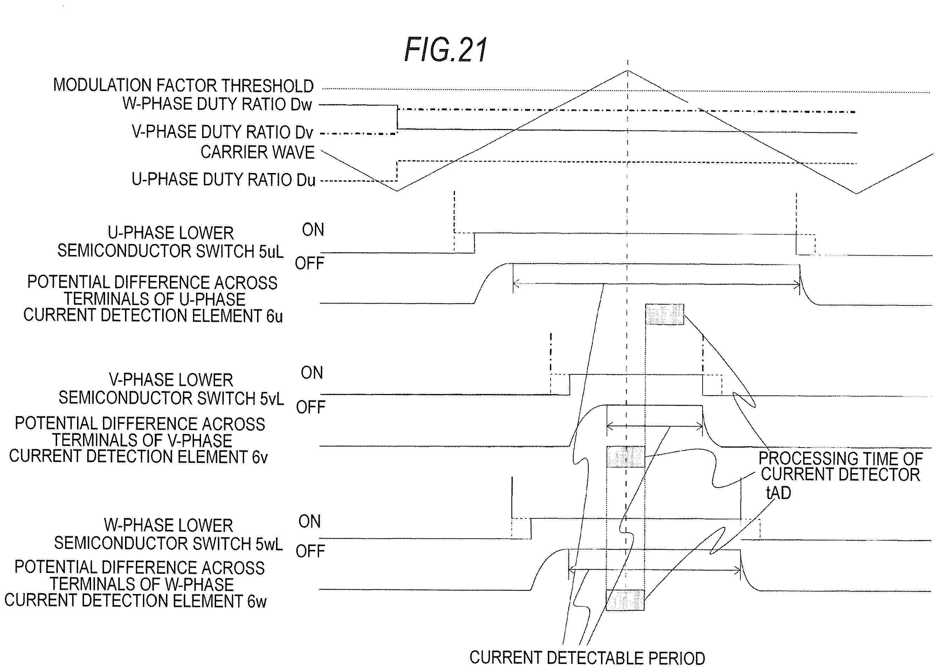

Also, in a case, for example, as is shown in Fig. 21 where the phase Dmax with the largest duty ratio is the phase V, the phase D2nd with the second largest duty ratio is the phase W, and the phase with the third largest duty ratio is the phase U, the current values cannot be detected at the timing of the current value detection processing shown in Fig. 20. In order to overcome this inconvenience, as has been described above, it is desirable in the third embodiment to control the current detection phase selection means 8 so that the current value detection processing of the phase with the largest duty ratio and the current value detection processing of the phase with the second largest duty ratio are performed simultaneously near the center of the PWM pulse followed finally by the current value detection processing of the remaining phase by appropriately selecting the circuit to perform sample-and-hold processing and a circuit to perform analog-to-digital conversion, for example, of the phase V of Fig. 18. In other words, in a case where Dmax is the phase V and D2nd is the phase W, it is desirable to control the current detection phase selection means 8 so that the current value detection processing of the phase V is performed by the sample-and-hold circuit 71uvC and the current value detection processing of the phase W is performed by the sample-and-hold circuit 71vwC followed by the current value detection processing of the phase U.

In a case where Dmax is larger than 90%, a time to detect the current value of the phase with the largest duty ratio cannot be secured sufficiently as described above. Hence, the current value detection processing of the phase with the largest duty ratio is not performed.

In a case where it is determined that Dmax = phase U in STEP 806C, it is desirable to perform the control as follows. That is, the current value detection processing of the phase U with the largest duty ratio is not performed for the reason described above, and the current value detection processing of the phase V is performed by the sample-and-hold circuit 71uvC shown in Fig. 18 near the center of the PWM pulse and the current value detection processing of the phase W is performed simultaneously by the sample-and-hold circuit 71vwC near the center of the PWM pulse (Step 807C).

Likewise, in a case where it is determined in STEP 808C that Dmax = phase V, it is desirable to perform the control so that the current value detection processing of the phase V with the largest duty ratio is not performed and the current value detection processing of the phase U is performed by the sample-and-hold circuit 71uvC shown in Fig. 18 near the center of the PWM pulse and the current value detection processing of the phase W is performed simultaneously by the sample-and-hold circuit 71vwC near the center of the PWM pulse (STEP 809C).

Likewise, in a case where it is determined that Dmax = phase W (STEP 808C), it is desirable to perform control so that the current value detection processing of the phase W with the largest duty ratio is not performed and the current value detection processing of the phase U is performed by the sample-and-hold circuit 71uvC shown in Fig. 18 near the PWM pulse and the current value detection processing of the phase V is performed simultaneously by the sample-and-hold circuit 71vwC near the center of the PWM pulse (STEP 810C).

As has been described above, according to the invention of the third embodiment, the current detection phase selection means 8 obtains the voltage instruction values Vu*, Vv*, and Vw* calculated in the three-phase voltage instruction calculation means 3 or the duty ratio setting values of the three phases, Du, Dv, and Dw, outputted from the PWM drive means 4, and selects the phase for which the current value detection processing is to be performed and controls the timing for the respective phases according to the instruction values or the duty ratio setting values. Owing to this configuration, in a case where the current detection means 7C includes the two sample-and-hold circuits 71uvC and 71vwC, it is possible to detect the currents of all of the three phases in a case where the voltage instruction values or the duty ratios are smaller than a predetermined value . As with the advantage of the first embodiment above, the AC rotating machine can be controlled with accuracy by a steering operation with a small steering force, such as a steering operation near the central point of the steering wheel and a steering operation when the steering wheel is merely touched gently. Consequently, feeling can be enhanced in an electrical power steering apparatus adopting the invention in comparison with a case where the invention is not adopted.

Also, even at a high output with the duty ratio achieving 100%, because the currents of two phases other than the phase with the largest duty ratio can be detected, it is possible to realize the performance equivalent to that of the power conversion device in the related art that always performs the current value detection processing only for two phases.

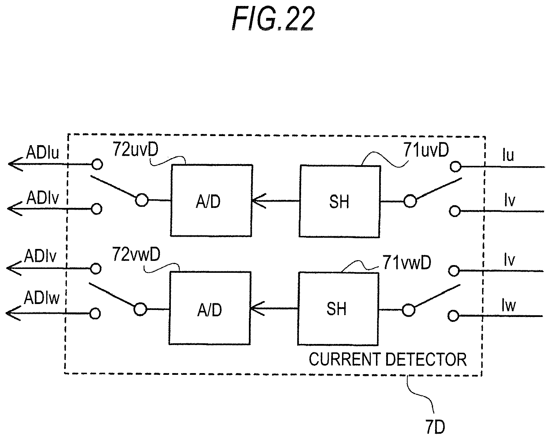

Also, the third embodiment has described a case as is shown in Fig. 18 where the current detection means 7C is formed of the two sample-and-hold circuits 71uvC and 71vwC and the two analog-to-digital conversion devices 72uvC and 72vwC and includes at least one input terminal from which inputs can be made to the both sample-and-hold circuits and at least one output terminal from which outputs can be made from the both analog-to-digital conversion circuits. However, even in a case as is shown in Fig. 22 where current detection means 7D is formed of two sample-and-hold circuits 71uvD and 71vwD and two analog-to-digital conversion devices 72uvD and 72vwD and has a terminal configuration that makes it possible to input an input signal of at least one phase among input signals from the current detection resistors 6 of the three phases into the both sample-and-hold circuits, the control can be performed in the same manner as in the third embodiment. Importantly, the circuits to perform sample-and-hold processing and circuits to perform analog-to-digital conversion for the respective phases are appropriately selected. That is, it becomes possible to detect the currents of all of the three phases in a case where the voltage instruction values (duty ratios) are smaller than the predetermined value by controlling the timing of the current value detection processing so that the current values of the phase with the largest voltage instruction value and the phase with the second largest voltage instruction value are detected by different sample-and-hold circuits and different analog-to-digital conversion circuits and the current value of the phase with the third largest voltage instruction value is detected following the detection of the current values of the phase with the largest voltage instruction value and the phase with the second largest voltage instruction value using two conversion devices. In a case where the voltage instruction values (duty ratios) are larger than the predetermined value, it becomes possible to perform the current value detection processing of the phases with the second and third largest voltage instruction values simultaneously using different sample-and-hold circuits and different analog-to-digital conversion devices.

Fourth Embodiment

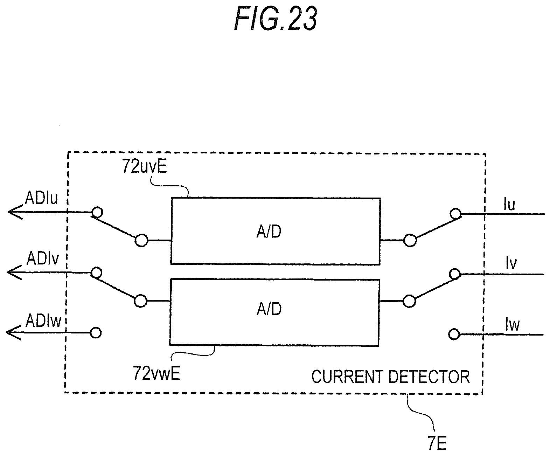

In the third embodiment above, as are shown in Figs. 18 and 22, the current detection means 7 is formed of sample-and-hold circuits and analog-to-digital conversion circuits. However, even in a case as in Fig. 23 where current detection means 7E does not include any sample-and-hold circuit and is formed of only two analog-to-digital conversion circuits 72uvE and 72vwE, advantages same as those of the third embodiment above can be obtained by performing the control in the same manner as in the third embodiment above.

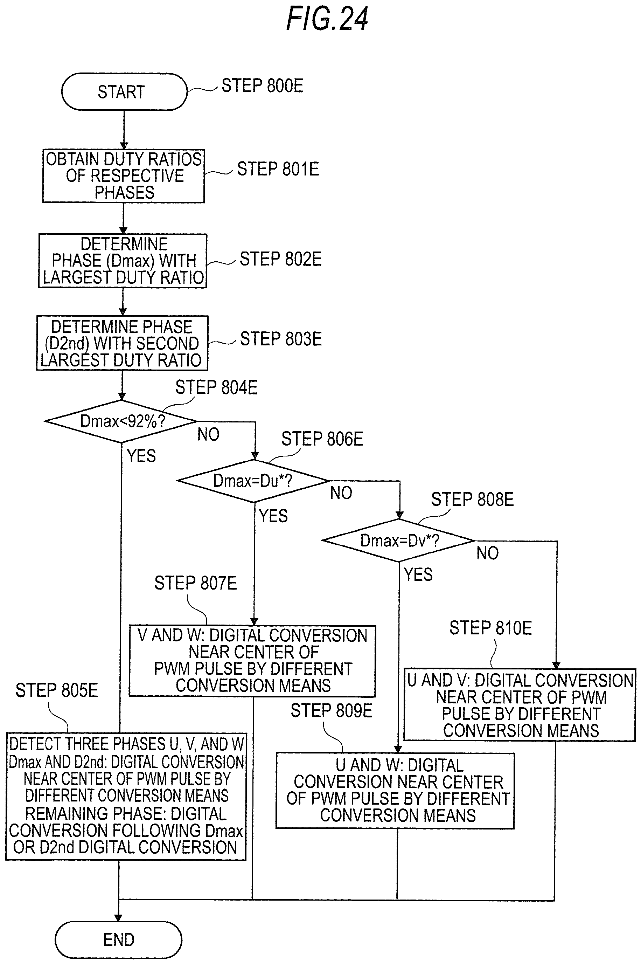

In a case where the sample-and-hold circuits are included, at which timing the current value detection processing, including sampling processing of the current detection value, is to be performed is determined according to the respective duty ratios. However, in a case where no sample-and-hold circuit is included as in the fourth embodiment, it is sufficient to determine at which timing analog-to-digital conversion is applied to the current detection value according to the respective duty ratios. Fig. 24 shows a flowchart depicting an operation in this case.

Because an operation of Fig. 24 is the same as the operation of the flowchart of Fig. 19 described above, a detailed description is omitted by attaching a capital E at the end of the numbers denoting the respective flows of Fig. 24.

In the third embodiment above, a sum of the time the sample-and-hold circuits 71uvC and 71vwC require for the processing by the current detection means 7C shown in Fig. 18 and the time the analog-to-digital conversion circuits 72uvC and 72vwC require for the processing is assumed to be equal to the one found in accordance with Equation (1) above and is therefore given as tADCC. Hence, a time tADCE required for the current detection processing in a case where no sample-and-hold circuit is included becomes shorter than the time tADCC required for the current detection processing in a case where the sample-and-hold circuit is included.

In a case where the fourth embodiment uses a microcomputer capable of selecting whether the sample-and-hold circuit is present or not, adopting the configuration that does not include the sample-and-hold circuit means that values found in accordance with Equations (1), (2), (3), and (4) above become smaller. In other words, it means that the voltage instruction value 0.4Vdc (in terms of duty ratio: 90%) of the phase with the largest voltage instruction value described by way of example in the third embodiment above becomes larger. That is, there can be achieved an advantage that the current values of all of the three phases can be detected in a case where the voltage instruction value or the duty ratio is further larger.

For example, in the fourth embodiment, a time the current detection means 7E shown in Fig. 23 requires for the processing is only a time the analog-to-digital conversion circuits 72uvE and 72vwE require for the processing. Hence, assume that tADCE and a time tC of one cycle of the carrier wave are half the time expressed by Equation (1) above, that is, satisfy the relation expressed by Equation (8) as follows:

$$\mathrm{tADCE} \;=\; 0.02 \;\times\; \mathrm{tC} \quad \dots(8).$$

Given that a sum of a time of the transient state at the rising by the ON switching and a time of the transient state at the falling by the OFF switching is invariable, that is, tTS = 0. 06tC. Then, a time tDTE required for the current value detection processing of one phase is expressed by Equation (9) as follows:

$$\mathrm{tDTE} \;=\; \mathrm{tADCE} \;+\; \mathrm{tTS} \;=\; 0.02 \;\times\; \mathrm{tC} \;+\; \mathrm{tTS} \;=\; 0.08\mathrm{tC} \quad \dots(9).$$

By converting the result into a duty ratio, we obtain: (0.5 - 0.08) Vdc = 0.42Vdc = 92%.

Because the current detection means 7E of Fig. 23 is formed of the two analog-to-digital conversion circuits 72uvE and 72vwE, it becomes possible to detect currents of two phases within the time tDTE required for the current value detection processing of one phase.

As has been described above, according to the fourth embodiment, in a case where the configuration excluding the sample-and-hold circuit is adopted, as is depicted in the flowchart of Fig. 24, by controlling the timing of the current value detection processing performed by the current detection means 7E according to the voltage instruction values (duty ratios), it becomes possible to detect the currents of all of the three phases within one cycle of the carrier wave in a case where the voltage instruction value of the phase with the second largest voltage instruction value is equal to or smaller than 0.42Vdc (in terms of duty ratio: 92%).

Reference Signs List

    1: current instruction calculation means
    2: proportional-integral calculation means
    3: three-phase voltage instruction calculation means
    4: PWM drive means
    5: three-phase AC rotating machine drive circuit (inverter circuit)
    6: current detection resistor
    7: current detection means
    8: current detection phase selection means
    9: coordinate conversion means
    10: three-phase AC rotating machine
    11: position sensor
    12: DC voltage source
    5H (5uH, 5vH, and 5wH) : first semiconductor switching elements
    5L (5uL, 5vL, and 5wL) : second semiconductor switching elements
    TIq: q-axis target current
    TId: d-axis target current
    Iq: q-axis detection current
    Id: d-axis detection current
    Vq: instruction voltage of axis q
    Vd: instruction voltage of axis d
    Vu*: U-phase voltage instruction value

Vv*: V-phase voltage instruction value
Vw*: W-phase voltage instruction value
Du: U-phase duty ratio
Dv: V-phase duty ratio
Dw: W-phase duty ratio
Pu: drive instruction to first semiconductor switching element of phase U
Nu: drive instruction to second semiconductor switching element of phase U
Pv: drive instruction to first semiconductor switching element of phase V
Nv: drive instruction to second semiconductor switching element of phase V
Pw: drive instruction to first semiconductor switching element of phase W
Nw: drive instruction to second semiconductor switching element of phase W
Vu: U-phase voltage of three-phase AC rotating machine
Vv: V-phase voltage of three-phase AC rotating machine
Vw: W-phase voltage of three-phase AC rotating machine
ADIu: U-phase current digital value
ADIv: V-phase current digital value
ADIw: W-phase current digital value
ADC: current detection phase selection instruction
DIu: U-phase current value
DIv: V-phase current value
DIw: W-phase current value

**Claims**

1. A power conversion device, comprising:

    an inverter circuit (5) provided with serial bodies aligned in parallel between a positive and a negative terminals of a DC voltage source (12) and formed of switching elements (5H, 5L) in pairs corresponding to respective phases (U, V, W) of a multiphase AC motor (10) and configured in such a manner that voltages (Vw, Vv, Vu) of the respective phases to drive the motor (10) are extracted from connection points of the switching elements (5H, 5L) in the respective serial bodies;
    current detection resistors (6u, 6v, 6w) connected between the respective serial bodies and the negative terminal of the DC voltage source;
    current detection means (7) for detecting a current flowing to the motor (10) for each phase by detecting the potential difference across the terminals of the respective current detection resistors; A/D conversion means (72) provided to the current detection means (7) for performing current value detection processing by converting current detection signals (Iu, Iv, Iw) detected by the current detection means (7) to digital signals (ADIu, ADIv, ADIw);
    a control unit (1) that outputs drive signals to perform PWM control on the respective switching elements (5H, 5L) of the inverter circuit (5) according to voltage instruction values (Vu*, Vv*, Vw*) of voltages to be applied to the respective phases of the motor (10) or duty ratio setting values; and
    current detection phase selection means (8) for selecting the current detection signals detected by the respective current detection means (7) and controlling timing of the current detection value detection processing by the A/D conversion means,
    the power conversion device being **characterized in that** the current detection phase selection means (8) sets the timing of the current value detection processing by the A/D conversion means (72) within one cycle of a PWM pulse, which is a carrier wave in the PWM control, according to the voltage instruction values or the duty ratio setting values, wherein the current value detection processing of a phase with a third largest voltage instruction value or duty cycle is performed following the current value detection processing of phases with a largest and second largest voltage instruction values or duty cycles.

2. The power conversion device according to claim 1, **characterized in that**:
    the current value detection processing of a phase with a largest duty ratio setting value is performed near a center of the PWM pulse.

3. The power conversion device according to claim 1, **characterized in that**:
    the current value detection processing is performed after a predetermined time from ON or OFF timing of the PWM pulse.

4. The power conversion device according to claim 1, **characterized in that**:
in a case where a duty ratio of a phase with a second largest duty ratio setting value is equal to or larger than a predetermined value, the current value detection processing of the phase with the second largest duty ratio is performed near a center of the PWM pulse.

5. The power conversion device according to any one of claims 1 through 3, **characterized in that**:
the current value detection processing is performed by a fewer number of the A/D conversion means (72) than the number of the phases of the multiphase motor (10).

6. The power conversion device according to claim 5, **characterized in that**:
the number of the A/D conversion means (72) is one.

7. The power conversion device according to claim 5, **characterized in that**:
the multiphase motor (10) has three phases and the number of the A/D conversion means (72) is two.

**Patentansprüche**

1. Stromwandlungsvorrichtung, umfassend:

eine Wechselrichterschaltung (5), die mit seriellen Körpern bereitgestellt ist, die parallel zwischen einem positiven und einem negativen Anschluss einer Gleichstrom-Spannungsquelle (12) ausgerichtet sind und aus Schaltelementen (5H, 5L) in Paaren ausgebildet sind, die jeweiligen Phasen (U, V, W) eines mehrphasigen Wechselstrommotors (10) entsprechen und derart konfiguriert sind, dass Spannungen (Vw, Vv, Vu) der jeweiligen Phasen zum Antreiben des Motors (10) von Verbindungspunkten der Schaltelemente (5H, 5L) in den jeweiligen seriellen Körpern extrahiert werden;
Stromdetektionswiderstände (6u, 6v, 6w), die zwischen den jeweiligen seriellen Körpern und dem negativen Anschluss der Gleichstrom-Spannungsquelle verbunden sind;
Stromdetektionsmittel (7) zum Detektieren eines Stroms, der zu dem Motor (10) für jede Phase fließt, durch Detektieren des Potenzialunterschieds zwischen den Anschlüssen der jeweiligen Stromdetektionswiderstände;
A/D-Wandlungsmittel (72), bereitgestellt für das Stromdetektionsmittel (7), zum Durchführen einer Stromwert-Erfassungsverarbeitung durch Wandeln von Stromerfassungssignalen (Iu, Iv, Iw), die durch das Stromdetektionsmittel (7) erfasst werden, in digitale Signale (ADIu, ADIv, ADIw);
eine Steuereinheit (1), die Ansteuersignale ausgibt, zum Durchführen einer PWM-Steuerung an den jeweiligen Schaltelementen (5H, 5L) der Wechselrichterschaltung (5) gemäß Spannungsanweisungswerten (Vu*, Vv*, Vw*) von Spannungen, die an den jeweiligen Phasen des Motors (10) angelegt werden, oder Tastverhältnis-Einstellwerten; und
Stromdetektions-Phasenauswahlmittel (8) zum Auswählen der Stromdetektionssignale, die von dem jeweiligen Stromdetektionsmittel (7) detektiert werden, und zum Steuern eines Zeitpunkts der Stromwert-Erfassungsverarbeitung durch das A/D-Wandlungsmittel,
wobei die Stromumwandlungsvorrichtung **dadurch gekennzeichnet ist, dass** das Stromdetektions-Phasenauswahlmittel (8) den Zeitpunkt der Stromwert-Erfassungsverarbeitung durch das A/D-Wandlungsmittel (72) innerhalb eines Zyklus eines PWM-Impulses einstellt, der eine Trägerwelle in der PWM-Steuerung ist, gemäß den Spannungsanweisungswerten oder den Tastverhältnis-Einstellwerten, wobei die Stromwert-Erfassungsverarbeitung einer Phase mit einem drittgrößten Spannungsanweisungswert oder Tastzyklus nach der Stromwert-Erfassungsverarbeitung von Phasen mit einem größten und einem zweitgrößten Spannungsanweisungswert oder Tastzyklen durchgeführt wird.

2. Stromwandlungsvorrichtung nach Anspruch 1, **dadurch gekennzeichnet, dass**:
die Stromwert-Erfassungsverarbeitung einer Phase mit einem größten Tastverhältnis-Einstellwert nahe einer Mitte des PWM-Pulses durchgeführt wird.

3. Stromwandlungsvorrichtung nach Anspruch 1, **dadurch gekennzeichnet, dass**:
die Stromwert-Erfassungsverarbeitung nach einer vorbestimmten Zeit von einem EIN- oder AUS-Zeitpunkt des PWM-Impulses durchgeführt wird.

**4.** Stromwandlungsvorrichtung nach Anspruch 1, **dadurch gekennzeichnet, dass**:
in einem Fall, in dem ein Tastverhältnis einer Phase mit einem zweitgrößten Tastverhältnis-Einstellwert gleich oder größer als ein vorbestimmter Wert ist, die Stromwert-Erfassungsverarbeitung der Phase mit dem zweitgrößten Tastverhältnis nahe einer Mitte des PWM-Pulses durchgeführt wird.

**5.** Stromwandlungsvorrichtung nach einem der Ansprüche 1 bis 3, **dadurch gekennzeichnet, dass**:
die Stromwert-Erfassungsverarbeitung durch eine geringere Anzahl der A/D-Wandlungsmittel (72) als die Anzahl der Phasen des Mehrphasenmotors (10) durchgeführt wird.

**6.** Stromwandlungsvorrichtung nach Anspruch 5, **dadurch gekennzeichnet, dass**:
die Anzahl der A/D-Wandlungsmittel (72) eins ist.

**7.** Stromwandlungsvorrichtung nach Anspruch 5, **dadurch gekennzeichnet, dass**:
der Mehrphasenmotor (10) drei Phasen aufweist und die Anzahl der A/D-Wandlungsmittel (72) zwei ist.


**Revendications**

**1.** Dispositif de conversion d'énergie, comprenant :

un circuit d'onduleur (5) pourvu de corps en série alignés en parallèle entre une borne positive et une borne négative d'une source de tension CC (12) et formé d'éléments de commutation (5H, 5L) en paires correspondant à des phases respectives (U, V, W) d'un moteur CA multiphase (10) et configuré de manière que des tensions (Vw, Vv, Vu) des phases respectives pour entraîner le moteur (10) soient extraites de points de connexion des éléments de commutation (5H, 5L) dans les corps en série respectifs ;
des résistances de détection de courant (6u, 6v, 6w) connectées entre les corps en série respectifs et la borne négative de la source de tension CC ;
des moyens de détection de courant (7) pour détecter un courant s'écoulant vers le moteur (10) pour chaque phase en détectant la différence de potentiel aux bornes des résistances de détection de courant respectives ;
des moyens de conversion A/N (72) fournis aux moyens de détection de courant (7) pour effectuer un traitement de détection de valeur de courant en convertissant des signaux de détection de courant (Iu, Iv, Iw) détectés par les moyens de détection de courant (7) en signaux numériques (ADIu, ADIv, ADIw) ;
une unité de commande (1) qui délivre des signaux d'entraînement pour effectuer une commande PWM sur les éléments de commutation respectifs (5H, 5L) du circuit d'onduleur (5) selon des valeurs d'instructions (Vu*, Vv*, Vw*) de tensions à appliquer aux phases respectives du moteur (10) ou aux valeurs de réglage de rapport de service ; et
des moyens de sélection de phase de détection de courant (8) pour sélectionner les signaux de détection de courant détectés par les moyens de détection de courant respectifs (7) et commander la synchronisation du traitement de détection de valeur de détection du courant par les moyens de conversion A/N,
le dispositif de conversion d'énergie étant **caractérisé en ce que** les moyens de sélection de phase de détection de courant (8) règle la synchronisation du traitement de détection de valeur de courant par les moyens de conversion A/N (72) dans un cycle d'une impulsion PWM, qui est une onde porteuse dans la commande PWM, selon les valeurs d'instruction de tension ou les valeurs de réglage de rapport de service, dans lequel le traitement de détection des valeur de courant d'une phase ayant une troisième valeur d'instruction de tension la plus grande ou un cycle de service le plus grand est effectué après le traitement de détection de valeur de courant de phases ayant une valeur d'instruction de tension la plus grande ou un cycle de service les plus grand et des secondes valeurs d'instruction de tension ou des cycles de service les plus grand(e)s.

**2.** Dispositif de conversion d'énergie selon la revendication 1, **caractérisé en ce que** :
le traitement de détection de valeur de courant d'une phase ayant une valeur de réglage de rapport de service la plus grande est effectué près d'un centre de l'impulsion PWM.

**3.** Dispositif de conversion d'énergie selon la revendication 1, **caractérisé en ce que** :
le traitement de détection de valeur du courant est effectué après un temps prédéterminé à partir de la synchronisation MARCHE ou ARRET de l'impulsion PWM.

**4.** Dispositif de conversion d'énergie selon la revendication 1, **caractérisé en ce que**,
dans le cas où un rapport de service d'une phase ayant une seconde valeur de réglage de rapport de service la plus grande est égal ou supérieur à une valeur prédéterminée, le traitement de détection de valeur du courant de la phase ayant le second rapport de service le plus grand est effectué près d'un centre de l'impulsion PWM.

5. Dispositif de conversion d'énergie selon l'une quelconque des revendications 1 à 3, **caractérisé en ce que** : le traitement de détection de valeur de courant est effectuée par un nombre des moyens de conversion A/N (72) inférieur au nombre des phases du moteur multiphase (10).

6. Dispositif de conversion d'énergie selon la revendication 5, **caractérisé en ce que** : le nombre des moyens de conversion A/N (72) est un.

7. Dispositif de conversion d'énergie selon la revendication 5, **caractérisé en ce que**: le moteur multiphase (10) a trois phases et le nombre des moyens de conversion A/N (72) est de deux.

*FIG.1*

EP 2 790 317 B1

# FIG.2

CARRIER WAVE

U-PHASE VOLTAGE INSTRUCTION VALUE Vu*

0.5vdc
0.4vdc

-0.5vdc

SEMICONDUCTOR SWITCH 5uH — ON / OFF

SEMICONDUCTOR SWITCH 5uL — ON / OFF

POTENTIAL DIFFERENCE ACROSS TERMINALS OF CURRENT DETECTION RESISTOR 6u

CURRENT DETECTABLE PERIOD

PERIOD 1 | PERIOD 2 | PERIOD 3 | PERIOD 4

ONE CYCLE OF CARRIER WAVE, tC

TIME

EP 2 790 317 B1

# FIG.3

# FIG.4

## FIG.5

$0.1 * tC$

$0.5 * tTS = 0.03 * tc$

$0.5 * tTS = 0.03 * tC$

$tADC = 0.04 * tC$

PROCESSING TIME
OF CURRENT DETECTOR
tADC

# FIG.6

0.1 * tC+2 * tADC

0.5 * tTS=0.03 * tC

0.5 * tTS=0.03 * tC

3 * tADC=0.12 * tC

| PROCESSING TIME OF CURRENT DETECTOR tADC | tADC | tADC |
|---|---|---|

# FIG.7

0.1 * tC +1 * tADC

0.5 * tTS=0.03 * tC

0.5 * tTS=0.03 * tC

2 * tADC=0.08 * tC

| PROCESSING TIME OF CURRENT DETECTOR tADC | tADC |
|---|---|

FIG.8

# FIG.9

MODULATION FACTOR THRESHOLD
V-PHASE DUTY RATIO Dv
U-PHASE DUTY RATIO Du
CARRIER WAVE
W-PHASE DUTY RATIO Dw

U-PHASE LOWER
SEMICONDUCTOR SWITCH 5uL ON / OFF

POTENTIAL DIFFERENCE ACROSS
TERMINALS OF U-PHASE
CURRENT DETECTION ELEMENT 6u

V-PHASE LOWER
SEMICONDUCTOR SWITCH 5vL ON / OFF

POTENTIAL DIFFERENCE ACROSS
TERMINALS OF V-PHASE
CURRENT DETECTION ELEMENT 6v

PROCESSING TIME OF
CURRENT DETECTOR
tAD

W-PHASE LOWER
SEMICONDUCTOR SWITCH 5wL ON / OFF

POTENTIAL DIFFERENCE ACROSS
TERMINALS OF W-PHASE
CURRENT DETECTION ELEMENT 6w

CURRENT DETECTABLE PERIOD

FIG.10

MODULATION FACTOR THRESHOLD
W-PHASE DUTY RATIO Dw
V-PHASE DUTY RATIO Dv
CARRIER WAVE
U-PHASE DUTY RATIO Du

U-PHASE LOWER
SEMICONDUCTOR SWITCH 5uL

POTENTIAL DIFFERENCE ACROSS
TERMINALS OF U-PHASE
CURRENT DETECTION ELEMENT 6u

V-PHASE LOWER
SEMICONDUCTOR SWITCH 5vL

POTENTIAL DIFFERENCE ACROSS
TERMINALS OF V-PHASE
CURRENT DETECTION ELEMENT 6v

W-PHASE LOWER
SEMICONDUCTOR SWITCH 5wL

POTENTIAL DIFFERENCE ACROSS
TERMINALS OF W-PHASE
CURRENT DETECTION ELEMENT 6w

ON
OFF

ON
OFF

ON
OFF

PROCESSING TIME OF
CURRENT DETECTOR
tAD

CURRENT DETECTABLE PERIOD

EP 2 790 317 B1

# FIG.11

**STEP 800A** — START

**STEP 801A** — OBTAIN VOLTAGE INSTRUCTION VALUE OF RESPECTIVE PHASES

**STEP 802A** — DETERMINE PHASE (Vmax) WITH LARGEST VOLTAGE INSTRUCTION VALUE

**STEAP 803A** — DETERMINE PHASE (V2nd) WITH SECOND LARGEST VOLTAGE INSTRUCTION VALUE

**STEP 804A** — V2nd<0.36Vdc?

YES / NO

**STEP 806A** — Vmax=Vu*?

YES / NO

**STEP 807A** — V2nd=Vv*?

YES / NO

**STEP 810A** — Vmax=Vv*?

YES / NO

**STEP 811A** — V2nd=Vu*?

YES / NO

**STEP 814A** — V2nd=Vu*?

YES / NO

**STEP 808A** — V: SAMPLING NEAR CENTER OF PWM PULSE W: SAMPLING FOLLOWING V-PHASE SAMPLING

**STEP 805A** — DETECT THREE PHASES U, V, AND W Vmax: SAMPLING NEAR CENTER OF PWM PULSE V2nd: SAMPLING FOLLOWING Vmax SAMPLING REMAINING PHASE: SAMPLING FOLLOWING V2nd SAMPLING

**STEP 809A** — W: SAMPLING NEAR CENTER OF PWM PULSE V: SAMPLING FOLLOWING W-PHASE SAMPLING

**STEP 812A** — U: SAMPLING NEAR CENTER OF PWM PULSE W: SAMPLING FOLLOWING U-PHASE SAMPLING

**STEP 813A** — W: SAMPLING NEAR CENTER OF PWM PULSE U: SAMPLING FOLLOWING W-PHASE SAMPLING

**STEP 815A** — U: SAMPLING NEAR CENTER OF PWM PULSE V: SAMPLING FOLLOWING U-PHASE SAMPLING

**STEP 816A** — V: SAMPLING NEAR CENTER OF PWM PULSE U: SAMPLING FOLLOWING V-PHASE SAMPLING

END

# FIG.12

MODULATION FACTOR THRESHOLD

V-PHASE DUTY RATIO Dv

U-PHASE DUTY RATIO Du

CARRIER WAVE

W-PHASE DUTY RATIO Dw

tdly

U-PHASE LOWER
SEMICONDUCTOR SWITCH 5uL — ON / OFF

POTENTIAL DIFFERENCE ACROSS
TERMINALS OF U-PHASE
CURRENT DETECTION ELEMENT 6u

V-PHASE LOWER
SEMICONDUCTOR SWITCH 5vL — ON / OFF

POTENTIAL DIFFERENCE ACROSS
TERMINALS OF V-PHASE
CURRENT DETECTION ELEMENT 6v

PROCESSING TIME OF
CURRENT DETECTOR
tAD

W-PHASE LOWER
SEMICONDUCTOR SWITCH 5wL — ON / OFF

POTENTIAL DIFFERENCE ACROSS
TERMINALS OF W-PHASE
CURRENT DETECTION ELEMENT 6w

CURRENT DETECTABLE PERIOD

EP 2 790 317 B1

## FIG.13

FIG.14

## FIG.15

## FIG.16

## FIG.17

START — STEP 800B

OBTAIN DUTY RATIOS OF RESPECTIVE PHASES — STEP 801B

DETERMINE PHASE (Dmax) WITH LARGEST DUTY RATIO — STEP 802B

DETERMINE PHASE (D2nd) WITH SECOND LARGEST DUTY RATIO — STEAP 803B

STEP 804B
D2nd<90%?  NO
YES

STEP 806B
Dmax=Du*?  NO
YES  STEP 807B

STEP 810B
Dmax=Dv*?  NO
YES

D2nd=Dv*?  NO
STEP 808B  YES

STEP 811B
D2nd=Du*?  NO
YES

STEP 814B
D2nd=Du*?  NO
STEP 815B  YES

V: DIGITAL CONVERSION NEAR CENTER OF PWM PULSE
W: DIGITAL CONVERSION FOLLOWING V-PHASE DIGITAL CONVERSION

STEP 809B

STEP 805B

U: DIGITAL CONVERSION NEAR CENTER OF PWM PULSE
V: DIGITAL CONVERSION FOLLOWING U-PHASE DIGITAL CONVERSION

STEP 816B

W: DIGITAL CONVERSION NEAR CENTER OF PWM PULSE
V: DIGITAL CONVERSION FOLLOWING W-PHASE DIGITAL CONVERSION

DETECT THREE PHASES U, V, AND W
Dmax: DIGITAL CONVERSION NEAR CENTER OF PWM PULSE
D2nd: DIGITAL CONVERSION FOLLOWING Dmax DIGITAL CONVERSION
REMAINING PHASE: DIGITAL CONVERSION FOLLOWING D2nd DIGITAL CONVERSION

STEP 812B

U: DIGITAL CONVERSION NEAR CENTER OF PWM PULSE
W: DIGITAL CONVERSION FOLLOWING U-PHASE DIGITAL CONVERSION

STEP 813B

W: DIGITAL CONVERSION NEAR CENTER OF PWM PULSE
U: DIGITAL CONVERSION FOLLOWING W-PHASE DIGITAL CONVERSION

V: DIGITAL CONVERSION NEAR CENTER OF PWM PULSE
U: DIGITAL CONVERSION FOLLOWING V-PHASE DIGITAL CONVERSION

END

## FIG.18

## FIG.19

```
         ┌──────────┐
         │  START   │────── STEP 800C
         └──────────┘
              │
              ▼
    ┌────────────────────┐
    │OBTAIN DUTY RATIOS OF│────── STEP 801C
    │  RESPECTIVE PHASES  │
    └────────────────────┘
              │
              ▼
    ┌────────────────────┐
    │DETERMINE PHASE (Dmax)│────── STEP 802C
    │WITH LARGEST DUTY RATIO│
    └────────────────────┘
              │
              ▼
    ┌────────────────────┐
    │DETERMINE PHASE (D2nd) WITH│────── STEP 803C
    │SECOND LARGEST DUTY RATIO │
    └────────────────────┘
              │
              ▼        STEP 804C
            ◇ Dmax<90%? ◇──── NO ── STEP 806C
              │                       │
             YES                    ◇ Dmax=Du*? ◇──── NO ── STEP 808C
                                      │                      │
                                     YES                   ◇ Dmax=Dv*? ◇──── NO
                                                             │
                                                            YES
```

**STEP 807C**

V AND W: SAMPLING NEAR CENTER OF PWM PULSE BY DIFFERENT CONVERSION MEANS

**STEP 810C**

U AND V: SAMPLING NEAR CENTER OF PWM PULSE BY DIFFERENT CONVERSION MEANS

**STEP 805C**

DETECT THREE PHASES U, V, AND W Dmax AND D2nd: SAMPLING NEAR CENTER OF PWM PULSE BY DIFFERENT CONVERSION MEANS REMAINING PHASE: SAMPLING FOLLOWING Dmax OR D2nd SAMPLING

**STEP 809C**

U AND W: SAMPLING NEAR CENTER OF PWM PULSE BY DIFFERENT CONVERSION MEANS

```
         ┌──────────┐
         │   END    │
         └──────────┘
```

## FIG.20

MODULATION FACTOR THRESHOLD

V-PHASE DUTY RATIO Dv

U-PHASE DUTY RATIO Du

CARRIER WAVE

W-PHASE DUTY RATIO Dw

U-PHASE LOWER
SEMICONDUCTOR SWITCH 5uL

ON

OFF

POTENTIAL DIFFERENCE ACROSS
TERMINALS OF U-PHASE
CURRENT DETECTION ELEMENT 6u

V-PHASE LOWER
SEMICONDUCTOR SWITCH 5vL

ON

OFF

POTENTIAL DIFFERENCE ACROSS
TERMINALS OF V-PHASE
CURRENT DETECTION ELEMENT 6v

PROCESSING TIME OF
CURRENT DETECTOR
tAD

W-PHASE LOWER
SEMICONDUCTOR SWITCH 5wL

ON

OFF

POTENTIAL DIFFERENCE ACROSS
TERMINALS OF W-PHASE
CURRENT DETECTION ELEMENT 6w

CURRENT DETECTABLE PERIOD

EP 2 790 317 B1

## FIG.21

MODULATION FACTOR THRESHOLD

W-PHASE DUTY RATIO Dw

V-PHASE DUTY RATIO Dv

CARRIER WAVE

U-PHASE DUTY RATIO Du

U-PHASE LOWER
SEMICONDUCTOR SWITCH 5uL

ON

OFF

POTENTIAL DIFFERENCE ACROSS
TERMINALS OF U-PHASE
CURRENT DETECTION ELEMENT 6u

V-PHASE LOWER
SEMICONDUCTOR SWITCH 5vL

ON

OFF

POTENTIAL DIFFERENCE ACROSS
TERMINALS OF V-PHASE
CURRENT DETECTION ELEMENT 6v

PROCESSING TIME OF
CURRENT DETECTOR
tAD

W-PHASE LOWER
SEMICONDUCTOR SWITCH 5wL

ON

OFF

POTENTIAL DIFFERENCE ACROSS
TERMINALS OF W-PHASE
CURRENT DETECTION ELEMENT 6w

CURRENT DETECTABLE PERIOD

# FIG.22

CURRENT DETECTOR

7D

ADlu
ADlv
ADlv
ADlw

72uvD
72vwD

A/D
A/D

SH
SH

71uvD
71vwD

Iu
Iv
Iv
Iw

# FIG.23

## FIG.24

```
      ( START )——— STEP 800E
          |
          v
  ┌─────────────────┐
  │ OBTAIN DUTY RATIOS │——— STEP 801E
  │   OF RESPECTIVE   │
  │      PHASES       │
  └─────────────────┘
          |
          v
  ┌─────────────────┐
  │    DETERMINE     │——— STEP 802E
  │ PHASE (Dmax) WITH │
  │ LARGEST DUTY RATIO │
  └─────────────────┘
          |
          v
  ┌─────────────────┐
  │ DETERMINE PHASE  │——— STEP 803E
  │ (D2nd) WITH SECOND │
  │ LARGEST DUTY RATIO │
  └─────────────────┘
          |        STEP 804E
          v
       < Dmax<92%? >————————NO
          |  YES                STEP 806E
                                  |
                               < Dmax=Du*? >————NO
                                  |  YES              STEP 808E
                                                        |
                                                     < Dmax=Dv*? >————NO
                                                        |  YES
```

STEP 807E

STEP 805E

STEP 810E

STEP 809E

**STEP 807E**
V AND W: DIGITAL CONVERSION NEAR CENTER OF PWM PULSE BY DIFFERENT CONVERSION MEANS

**STEP 810E**
U AND V: DIGITAL CONVERSION NEAR CENTER OF PWM PULSE BY DIFFERENT CONVERSION MEANS

**STEP 805E**
DETECT THREE PHASES U, V, AND W Dmax AND D2nd: DIGITAL CONVERSION NEAR CENTER OF PWM PULSE BY DIFFERENT CONVERSION MEANS REMAINING PHASE: DIGITAL CONVERSION FOLLOWING Dmax OR D2nd DIGITAL CONVERSION

**STEP 809E**
U AND W: DIGITAL CONVERSION NEAR CENTER OF PWM PULSE BY DIFFERENT CONVERSION MEANS

( END )

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070165431 A1
- US 20110062934 A1
- US 20100231154 A1
- JP 6205589 A
- JP 10028382 A
- JP 10054852 A
- JP 2005229760 A